# EUROPEAN PATENT APPLICATION

(11) **EP 2 071 828 A1**
(43) Date of publication of application: **17.06.2009**
(21) Application number: 07807130.5
(22) Date of filing: 12.09.2007
(51) Int. Cl.: H04N 5/00

(54) **COMMUNICATION TERMINAL DEVICE PERFORMING CONTENT DISPLAY CONTROL, CONTROL METHOD, AND VIDEO DISPLAY SYSTEM**

(30) Priority: 14.09.2006 JP 2006249518
(71) Applicant: Sharp Kabushiki Kaisha, Osaka-shi, Osaka 545-8522 (JP)
(72) Inventor: AZUMA, Akihiro, Uji-shi, Kyoto 611-0043 (JP); TAKEUCHI, Masaki, Kizugawa-shi, Kyoto 619-0215 (JP)
(74) Representative: Treeby, Philip David William
(86) International application number: PCT/JP2007/067723
(87) International publication number: WO 2008/032734

(57) **Abstract**

When it is judged that data communication with a video display device is enabled (YES in S110), a display element is displayed to transmit a control signal for operating the video display device (S115). When an instruction input for the display element is received, the control signal for controlling the video display device is transmitted to the video display device. The video display device performs a process corresponding to the received control signal.

## Description

### TECHNICAL FIELD

The present invention relates to a communication terminal device, a control method and a video display system and, more specifically, to a communication terminal device, a control method and a video display system performing contents display control.

### BACKGROUND ART

Recently, devices conforming to a standard allowing data communication among a plurality of different types of devices in premises with each other (hereinafter referred to as interoperability communication standard) have come to be used widely. An example of interoperability communication standard is DLNA (Digital Living Network Alliance) standard. Devices conforming to the interoperability communication standard include, for example, TV receivers, HDD (Hard disk drive) recorders and audio equipment. Generally, a device conforming to the interoperability communication standard is connectable to a network such as the Internet, through network equipment such as a router.

Further, home electric appliances that utilize infrastructure such as the Internet started to appear. With this situation, communication line operators started a service of providing Internet, telephone and multi-channel broadcast collectively (triple-play service). By way of example, when one subscribes to a service using FTTH (Fiber To The Home), payment of monthly fee of subscribed telephone (meal line) becomes unnecessary, and multi-channel broadcast and VOD (Video On Demand) services become available.

Further, even a service that collectively provides mobile communication service in addition to the triple-play service is taking shape. When mobile communication service is added, it becomes possible for a user to connect to a network such as the Internet using a single telephone number/mail address, if he/she carries a portable terminal as represented by a portable telephone. Further, it is expected that the portable telephone will be used as a remote controller at home, or access to one's home from an outside location will be realized easily.

Further, a device conforming to the interoperability communication standard connectable to a network is, generally, operable by remote control. Therefore, it is desired that a plurality of different types of devices operable by a remote controller and connectable to a network can be operated by one device.

Japanese Patent Laying-Open No. 2002-135810 (Patent Document 1) discloses a technique of using a communication terminal, which is connectable to a network such as the Internet and boasting very high penetration rate such as a portable telephone, as a remote controller for operating a device connectable to the network (hereinafter referred to as the first prior art).

Further, Japanese Patent Laying-Open No. 2001-275173 (Patent Document 2) discloses a technique in which an operation image in accordance with the type of equipment to be operated (hereinafter also referred to as the operated equipment) is displayed on operating side equipment, and the operating side equipment is used as a remote controller for operating the operated equipment (hereinafter also referred to as the second prior art).

Further, Japanese Patent Laying-Open No. 2001-136585 (Patent Document 3) discloses a technique of transmitting, to a remote controller, information of arrangement positions of a plurality of hyper-link character sequences in a Web page displayed on a TV receiver (hereinafter also referred to as the third prior art).
Patent Document 1: Japanese Patent Laying-Open No. 2002-135810
Patent Document 2: Japanese Patent Laying-Open No. 2001-275173
Patent Document 3: Japanese Patent Laying-Open No. 2001-136585

### DISCLOSURE OF THE INVENTION

### PROBLEMS TO BE SOLVED BY THE INVENTION

In these days the number of devices that are connectable to a network is increasing. Therefore, it is desirable if a plurality of different types of devices can be operated by one device. In the conventional technique, when one device is used as a remote controller for a desired one of the plurality of different types of devices, it takes much labor of the user to enable operation of the one device as the remote controller for the desired device.

Here, much labor involves a number of tasks such as selecting, on the device to be operated as the remote controller, a remote control mode corresponding to the desired device among a plurality of remote control modes for operating the plurality of different types of devices, and if the desired device is powered off, turning the device on. The first to third prior arts do not disclose any technique for solving the problem.

The present invention was made to solve the above-described problem and its object is to provide a communication terminal device, a control method and a video display system that realize operation of other device, without requiring much labor.

### MEANS FOR SOLVING THE PROBLEMS

In order to solve the above-described problem, according to an aspect, the present invention provides a communication terminal device capable of operating a video display device, the video display device performing, upon reception of a control signal, a process corresponding to the received control signal, including: a communication determining unit determining whether or not data communication with the video display device is possible; a display unit displaying, if the communication determining unit determines data communication is possible, a display element for transmitting the control signal for operating the video display device; an input receiving unit receiving an external instruction input; and a transmitting unit transmitting, when the input receiving unit receives an instruction input corresponding to the display element displayed on the display unit, the control signal for operating the video display device to the video display device.

Preferably, the device further includes a receiving unit receiving operation data for operating the video display device transmitted from the video display device; and a display control unit displaying an operation image based on the received operation data on the display unit; wherein the transmitting unit transmits, when the input receiving unit receives an instruction input to the operation image displayed on the display unit, the control signal for operating the video display device corresponding to the received instruction input, to the video display device.

Preferably, the control signal transmitted from the transmitting unit is a signal for controlling a power source of the video display device.

Preferably, the transmitting unit transmits, when a content is displayed on the display unit, a control signal to have the content displayed on the display unit displayed on the video display device, to the video display device.

Preferably, the communication determining unit determines whether or not data communication is possible with the video display device arranged at a position where distance between the communication terminal device and the video display device is not longer than a prescribed distance.

According to another aspect, the present invention provides a communication terminal device capable of operating a video display device, the video display device performing, upon reception of a control signal, a process corresponding to the received control signal, including: a communication determining unit determining whether or not data communication with the video display device is possible; a display unit for displaying a content; and a transmitting unit transmitting, if the communication determining unit determines data communication is possible and a content is displayed on the display unit, a control signal to have the content displayed on the display unit displayed on the video display device, to the video display device.

Preferably, the device further includes an input receiving unit receiving an external instruction input; a receiving unit receiving operation data for operating the video display device transmitted from the video display device; and a display control unit displaying an operation image based on the received operation data on the display unit; wherein the transmitting unit transmits, when the input receiving unit receives an instruction input to the operation image displayed on the display unit, the control signal for operating the video display device corresponding to the received instruction input, to the video display device.

Preferably, the communication determining unit determines whether or not data communication is possible with the video display device arranged at a position where distance between the communication terminal device and the video display device is not longer than a prescribed distance.

According to a further aspect, the present invention provides a control method executed in a system including a communication terminal device with a display unit and a video display device, including the steps of: the video display device transmitting a connection signal enabling data communication with the video display device, to the communication terminal device; determining whether or not the communication terminal device has received the connection signal; if it is determined that the connection signal has been received, displaying, on the display unit, a display element for transmitting a control signal for operating the video display device; transmitting, if an instruction input to the display element displayed on the display unit is received by the communication terminal device, the control signal for operating the video display device to the video display device; the video display device receiving the control signal; and the video display device executing a process corresponding to the received control signal.

According to a still further aspect, the present invention provides a control method executed by a communication terminal device capable of operating a video display device, the video display device performing, upon reception of a control signal, a process corresponding to the received control signal, and including a display unit for displaying a content, including the steps of: determining whether or not data communication with the video display device is possible; and if it is determined that data communication is possible and a content is displayed on the display unit, transmitting a control signal to have the content displayed on the display unit displayed on the video display device, to the video display device.

Preferably, at the step of determining whether or not data communication is possible, whether or not data communication is possible with the video display device arranged at a position where distance between the communication terminal device and the video display device is not longer than a prescribed distance is determined.

According to a still further aspect, the present invention provides a video display system including a communication terminal device and a video display device; wherein the video display device includes a transmitting unit transmitting a connection signal enabling data communication with the video display device to the communication terminal device; the communication terminal device includes a communication determining unit determining whether or not the connection signal has been received, a display unit for displaying a content, and a transmitting unit transmitting, if it is determined by the communication determining unit that the connection signal has been received and a content is displayed on the display unit, a control signal to have the content displayed on the display unit displayed on the video display device, to the video display device; and the video display device further includes a receiving unit receiving the control signal, and an executing unit executing a process corresponding to received control signal.

Preferably, the video display device further includes a content display unit for displaying a content, and an information transmitting unit for transmitting, when a content is displayed on the content display unit, content information to have the content displayed on the content display unit displayed on the communication terminal device, to the communication terminal device.

### EFFECTS OF THE INVENTION

If it is determined that data communication with the video display device is possible, the communication terminal device in accordance with the present invention displays a display element for transmitting a control signal for operating the video display device. When an instruction input to the display element is received, the control signal for operating the video display device is transmitted to the video display device. The video display device performs a process corresponding to the received control signal. Specifically, when data communication with the video display device becomes possible, the communication terminal device displays a display element for transmitting the control signal for operating the video display device.

Therefore, it is possible for the user, simply by inputting an instruction to the displayed display element, to operate the video display device. As a result, the effect is attained that other device can be operated without requiring much labor.

If data communication with the video display device is possible and a content is displayed on the display unit, the communication terminal device in accordance with the present invention transmits a control signal to have the content displayed on the display unit displayed on the video display device, to the video display device.

Therefore, simply if data communication between the communication terminal device held by the user and the video display device becomes possible, the video display device can be operated. As a result, the effect is attained that other device can be operated without requiring much labor.

According to the control method of the present invention, when the communication terminal device receives a connection signal enabling data communication with the video display device, a display element for transmitting a control signal for operating the video display device is displayed. When an instruction input to the display element is received, the control signal for operating the video display device is transmitted to the video display device. The video display device performs a process corresponding to the received control signal.

Therefore, it is possible for the user, simply by inputting an instruction to the displayed display element, to operate the video display device. As a result, the effect is attained that other device can be operated without requiring much labor.

According to the control method of the present invention, if data communication between the communication terminal device and the video display device is possible and a content is displayed on the display unit, a control signal to have the content displayed on the display unit displayed on the video display device is transmitted to the video display device.

Therefore, simply if data communication between the communication terminal device held by the user and the video display device becomes possible, the video display device can be operated. As a result, the effect is attained that other device can be operated without requiring much labor.

The video display system in accordance with the present invention includes a communication terminal device and a video display device. The video display device transmits a connection signal enabling data communication with the video display device, to the communication terminal device. When the connection signal is received and a content is displayed on the display unit, the communication terminal device transmits a control signal to have the content displayed on the display unit displayed on the video display device, to the video display device. The video display device performs a process corresponding to the received control signal.

Therefore, simply if data communication between the communication terminal device held by the user and the video display device becomes possible, the video display device can be operated. As a result, the effect is attained that other device can be operated without requiring much labor.

### BRIEF DESCRIPTION OF THE DRAWINGS

Fig. 1 is a diagram showing a configuration of a network system in accordance with an embodiment.
Fig. 2 is a front view showing an appearance of the communication terminal device.
Fig. 3 is a left side view showing an appearance of the communication terminal device.
Fig. 4 is a rear view showing an appearance of the communication terminal device.
Fig. 5 is a block diagram showing an internal configuration of the communication terminal device.
Fig. 6 is a front view showing an appearance of the video display device.
Fig. 7 is a block diagram showing an internal configuration of the video display device.
Fig. 8 is a block diagram showing an internal configuration of a service server.
Fig. 9 is an example of remote controller image.
Fig. 10 is a flowchart of content handling process.
Fig. 11 is an example of device specifying data.
Fig. 12 is an example of device recognizing image.
Fig. 13 is an example of program selection data.
Fig. 14 is an example of operation image.
Fig. 15 is an example of operation guidance display image.
Fig. 16 is a flowchart of operation determining process M and control-signal-specific process T.
Fig. 17 is a flowchart of a standby mode entrance process.
Fig. 18 is an example of continued display confirming image.
Fig. 19 is an example of device recognizing image.
Fig. 20 is a functional block diagram of a control unit in accordance with an embodiment.
Fig. 21 is a functional block diagram of a control unit in accordance with an embodiment.
Fig. 22 is a flowchart of menu display process.
Fig. 23 is an example of menu data.
Fig. 24 is an example of menu image.
Fig. 25 is a flowchart of operation determining process MA and control-signal-specific process TA.
Fig. 26 is a flowchart of a process performed by the communication terminal device, sub-menu obtaining process T, and a process performed by the service server.
Fig. 27 is an example of sub menu data.
Fig. 28 is an example of sub menu image.
Fig. 29 is an example of the operation image.
Fig. 30 is a flowchart of sub menu obtaining process M, a process performed by the video display device, and a process performed by the service server.
Fig. 31 is an example of sub menu data.
Fig. 32 is an example of sub menu image.
Fig. 33 is a flowchart of a process performed by the communication terminal device, content obtaining process T, and a process performed by the service server.
Fig. 34 is an example of content display image.
Fig. 35 is an example of operation image.
Fig. 36 is a flowchart of content obtaining process M, a process performed by the video display device, and a process performed by the service server.
Fig. 37 is a functional block diagram of two different control units in accordance with an embodiment.
Fig. 38 is another example of functional block diagram of the control unit in accordance with an embodiment.

### DESCRIPTION OF THE REFERENCE SIGNS

50 communication unit, 70 network, 180, 180A, 180B program, 300 remote controller, 500 communication terminal device, 510, 610, 810 control unit, 520, 620, 820 storage unit, 530, 630 display unit, 540 input unit, 555, 555A recording medium, 600 video display device, 800A service server, 800S search server, 800W Web server, 1000 network system.

### BEST MODES FOR CARRYING OUT THE INVENTION

In the following, embodiments of the present invention will be described with reference to the figures. In the following description, the same components are denoted by the same reference characters. Their names and functions are also the same. Therefore, detailed description thereof will not be repeated.

Contents discussed in the present invention intend digital data of video images, voice and images as well as related information thereof. Naturally, the contents are not limited to digital data, provided that they can be handled in the similar manner. Further, if it is the case that the contents are provided through a network such as television broadcast, internet broadcast or portable telephone network, is it possible that one content is provided from a plurality of networks.

### <First Embodiment>

### (System Configuration)

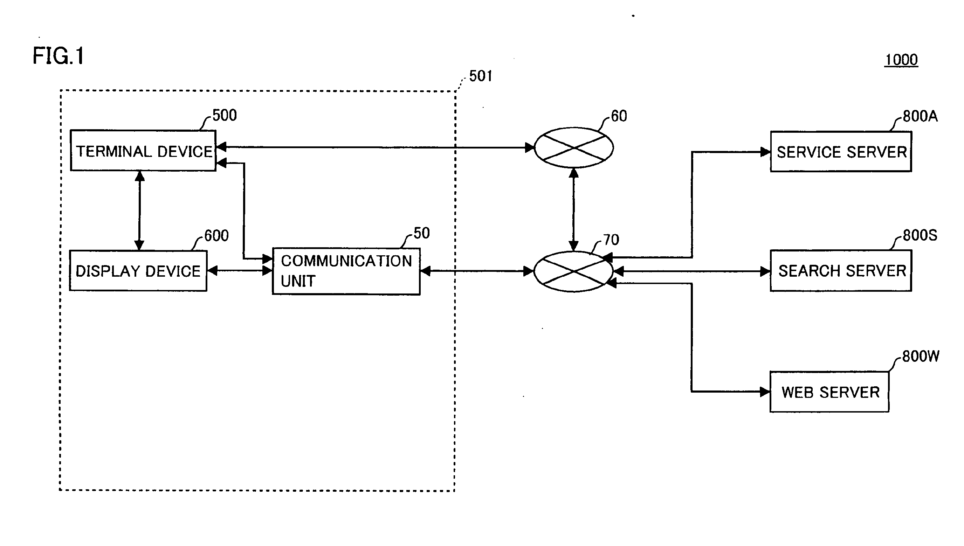

Fig. 1 shows a configuration of a network system 1000 in accordance with the present embodiment. Referring to Fig. 1, network system 1000 includes a home network 501.

Home network 501 is, for example, a network provided in premises. Here, premises mean the user's home, office or the like. Home network 501 includes a communication terminal device 500, a video display device 600, and a communication unit 50.

Communication terminal device 500 is a PDA (Personal Digital Assistance). Further, communication terminal device 500 has a function of a telephone. It is noted that communication terminal device 500 may not have the function of a telephone. Communication terminal 500 is not limited to a PDA, and it may be any device (for example, PC (Personal Computer), portable telephone) that is portable and has a communication function.

Communication terminal device 500 is capable of wireless data communication with a telephone network 60. Telephone network 60 is, for example, a telephone network for portable telephones. Packet communication fee will be charged for the data communication between communication terminal device 500 and telephone network 60, in accordance with the amount of data used for data communication.

Video display device 600 is a liquid crystal television. Video display device 600 is not limited to the liquid crystal television, and it may be any device that is capable of displaying an image. Video display device 600 may, for example, be a plasma television. Alternatively, video display device 600 may be a device including a display device for displaying an image and an image data transmitting device transmitting image data to be displayed on the display device. Examples of the image data transmitting device include an STB (Set Top Box), an HDD recorder and a DVD (Digital Versatile Disc) recorder.

Communication terminal device 500 and video display device 600 perform wireless or wired data communication. Specifically, communication terminal device 500 and video display device 600 form a video display system.

Communication unit 50 has a function of performing data communication to/from each of communication terminal device 500, video display device 600 and a network 70. Network 70 is an external network such as the Internet.

Communication unit 50 has a function of performing simultaneous data communication with a plurality of devices, utilizing wireless technique based on any of IEEE 802.11a, IEEE 802.11b and IEEE802.11g as wireless LAN standards. The wireless technique is not limited to the technique based on any of IEEE 802.11a, IEEE 802.11b and IEEE802.11g, and other wireless technique may be used. Therefore, communication unit 50 is capable of wireless data communication to/from each of communication terminal device 500, video display device 600 and network 70.

Further, communication unit 50 further has a communication interface utilizing Ethernet (registered trade mark), and has a router function including an NAT (Network Address Translation) function of converting, when a device in home network 501 issues a connection request to network 70, an address of the equipment to an address in the network. Therefore, communication unit 50 is capable of data communication with each of communication terminal device 500, video display device 600 and network 70, through, for example, an LAN cable. Specifically, communication unit 50 is capable of wired data communication with each of communication terminal device 500, video display device 600 and network 70.

Further, network 70 is capable of wireless or wired data communication with telephone network 60. Therefore, communication terminal device 500 is capable of data communication with network 70 through telephone network 60.

Network system 1000 further includes a service server 800A, a search server 800S and a Web server 800W.

Service server 800A is a server providing contents and contents-related information. The contents are, for example, moving images, music data and the like. If the contents are moving images of a program, for example, the contents-related information is, for example, program information. Service server 800A is a PC. It is noted that service server 800A is not limited to a PC, and any device may be used provided that it has a function of providing contents of moving images, contents of music data, contents-related information and the like.

Service server 800A records all programs of all channels of a prescribed time period (for example, 24 hours), from a certain date and time up to the present date and time, and stores record data of recorded programs. Service server 800A automatically eliminates record data that lasted for more than a prescribed time period (for example, 24 hours), from the present date and time. Therefore, it follows that service server 800A stores recorded data of all programs of all channels of the prescribed time period from a certain date and time up to the present date and time. Further, aside from the recorded data of broadcast programs, service server 800A stores video contents such as a movie, distributed in response to a distribution request from the device. If there is a distribution request for recorded data, service server 800A transmits or distributes, by streaming, the recoded data of which distribution is requested.

Further, service server 800A stores a program that is currently being broadcast, as well as moving image data to be broadcast within a prescribed time period (for example, 24 hours) in advance. If there is a distribution request for the moving image data of the program that is currently being broadcast, it distributes, by streaming, the moving image data to the device that requested distribution of the program.

Search server 800S is a server that searches, upon reception of a keyword as search information from a terminal device connected to network 70, for a URL (Uniform Resource Locator) of a Web page related to the received keyword. Search server 800S is a PC. Search server 800S is not limited to a PC, and it may be any device that has a function of searching, upon reception of a keyword from a terminal device connected to network 70, for a URL (Uniform Resource Locator) of a Web page related to the received keyword.

Web server 800W is a server providing data of a plurality of Web pages corresponding to each of a plurality of pieces of information of different types. For instance, Web server 800W provides data of a plurality of Web pages corresponding to information related to a movie. Web server 800W is a PC. Web server 800W is not limited to a PC, and it may be any device that has a function of providing data of a plurality of Web pages corresponding to each of a plurality of pieces of information of different types.

Each of service server 800A, search server 800S and Web server 800W performs wireless or wired data communication with network 70.

In the present embodiment, communication unit 50 is assumed to be capable of high speed data communication with each of communication terminal device 500, video display device 600 and network 70. By way of example, it is assumed that communication unit 50 is capable of data communication with each of communication terminal device 500, video display device 600 and network 70 at a rate of 100 Mbps (Mega bit per second) at the highest.

Further, it is assumed that network 70 is capable of high speed data communication with each of communication unit 50, telephone network 60, service server 800A, search server 800S and Web server 800W. It is assumed that network 70 is capable of high speed data communication with each of communication unit 50, telephone network 60, service server 800A, search server 800S and Web server 800W at a rate of 100 Mbps at the highest. Therefore, the maximum speed of data communication between video display device 600 and network 70 is assumed to be 100 Mbps. Further, the maximum speed of data communication between communication terminal device 500 and network 70 is assumed to be 100 Mbps.

It is assumed that the speed of data communication between communication terminal device 500 and telephone network 60 is slower than the speed of data communication between communication terminal device 500 and network 70. The maximum speed of data communication between communication terminal device 500 and telephone network 60 is, for example, assumed to be 256 kbps.

Further, it is assumed that the speed of data communication between communication terminal device 500 and video display device 600 is sufficiently higher than the speed of data communication between communication terminal device 500 and telephone network 60. It is assumed that the maximum speed of data communication between communication terminal device 500 and video display device 600 is, for example, 4 Mbps.

### (Communication Terminal Device)

Next, communication terminal device 500 will be described in detail.

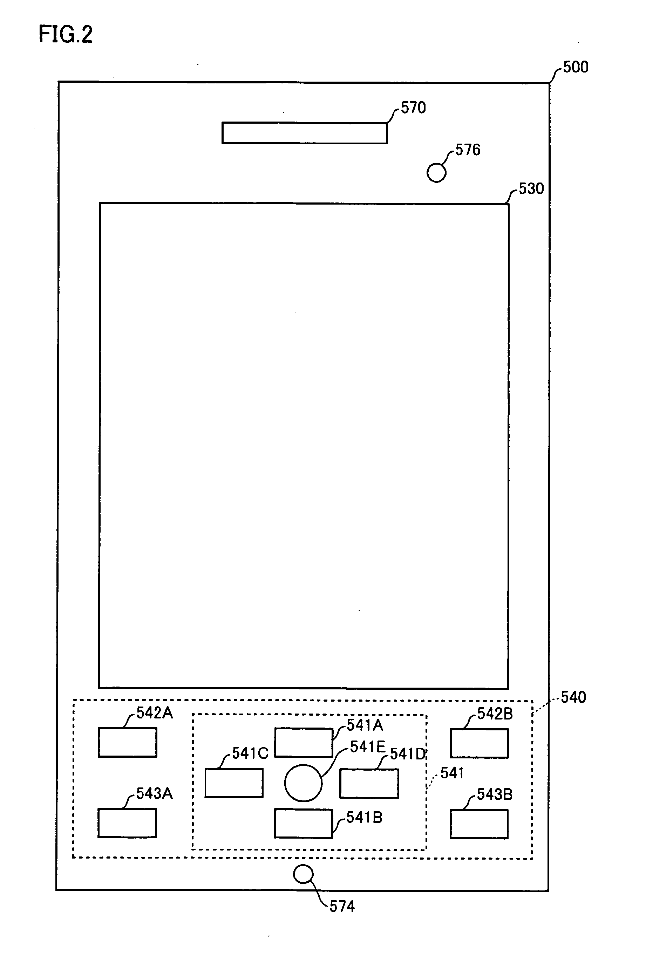

Fig. 2 is a front view showing the appearance of communication terminal device 500. Referring to Fig. 2, communication terminal device 500 includes a display unit 530, an audio output unit 570, an LED 576, and an input unit 540.

Display unit 530 has a function of displaying characters, images and the like. Display unit 530 is a device using any of an LCD panel (Liquid Crystal Display Panel), an FED panel (Field Emission Display Panel) and an organic EL display panel (Organic Electro luminescence Display Panel). It is noted that display unit 530 may be a device using a panel of display method other than those mentioned above.

Resolution of display unit 530 is width 480 (dots) x length 640 (dots). The resolution of display unit 530 is not limited to width 480 (dots) x length 640 (dots), and it may be different (for example, width 240 (dots) x length 320 (dots)).

Display unit 530 has a touch panel function, allowing input of information by the user directly touching the screen. Display unit 530 transmits position information of the screen position touched by the user to a control unit 510, which will be described later. Based on the received position information, control unit 510 performs a prescribed process.

Audio output unit 570 has a function of outputting telephone voice. Audio output unit 570 includes a speaker for outputting voice. Audio output unit 570 outputs, from the speaker, voice based on audio data received from control unit 510, which will be described later.

LED 576 provides light alarm in accordance with the process performed by communication terminal device 500. For instance, if there is an incoming call, LED 576 flickers.

Input unit 540 includes a group of buttons 541. The button group 541 includes direction buttons 541A, 541B, 541C and 541D, and a determination button 541E. Direction buttons 541A, 541B, 541C and 541D are to move, when an image is displayed on display unit 530, an object in the image (such as a cursor) up, down, to the left and to the right in response to pressing of the button by the user for a short period of time (of, for example, less than 1 sec.) (hereinafter also referred to as short-press).

Specifically, when short-pressed, direction buttons 541A, 541B, 541C and 541D move, for example, a cursor up, down, to the left or to the right. Further, when pressed by the user for a long period of time (for example, 1 sec. or longer) (hereinafter also referred to as long-press), direction buttons 541A, 541B, 541C and 541D can scroll the image up, down, to the left and to the right.

Determination button 541E determines, when short-pressed, an item or the like selected, for example, by short-pressing direction button 541A, 541B, 541C or 541D.

Input unit 540 further includes function buttons 542A, 542B, 543A and 543B. Each of the function buttons 542A and 542B are to activate, when short-pressed, a program or the like set in advance by the user.

Function button 543A is to start talking by short-pressing, when there is an incoming call to communication terminal device 500. Function button 543B is to end talking by short-pressing, when communication terminal device 500 is busy. Further, function button 543B switches power on/off of communication terminal device 500 when pressed by the user for a long period of time (for example, 1 sec. or longer) (hereinafter also referred to as long-press).

Input unit 540 transmits a button signal corresponding to a short-pressed or long-pressed button among the plurality of buttons provided on input unit 540, to control unit 510, which will be described later. Specifically, input unit 540 is an interface allowing the user to operate communication terminal device 500. In the following, a user operation of input unit 540 or a touch operation of display unit 530 will also be referred to as interface operation M.

Communication terminal device 500 further includes an audio input unit 574. Audio input unit 574 has a function of inputting voice during a call. Audio input unit 574 includes a microphone for voice input. Audio input unit 574 converts the voice collected by the microphone to audio data, and transmits the audio data to control unit 510, which will be described later, in communication terminal device 500.

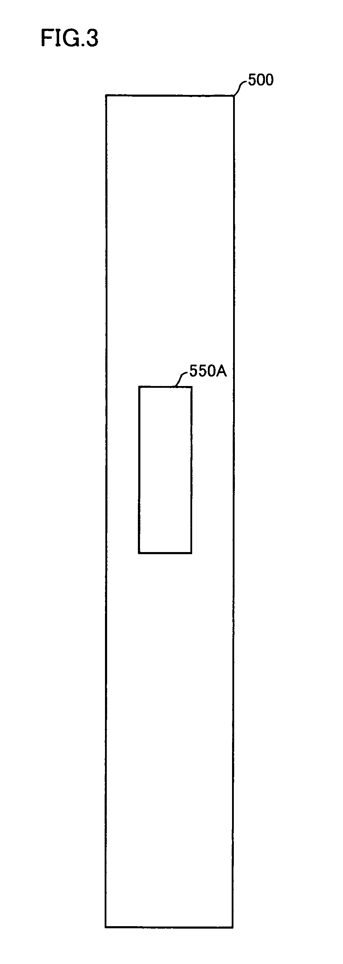

Fig. 3 is a left side view showing the appearance of communication terminal device 500. Referring to Fig. 3, communication terminal device 500 has a recording medium inserting unit 550A. A recording medium, which will be describe later, is inserted through recording medium inserting unit 550A to communication terminal device 500.

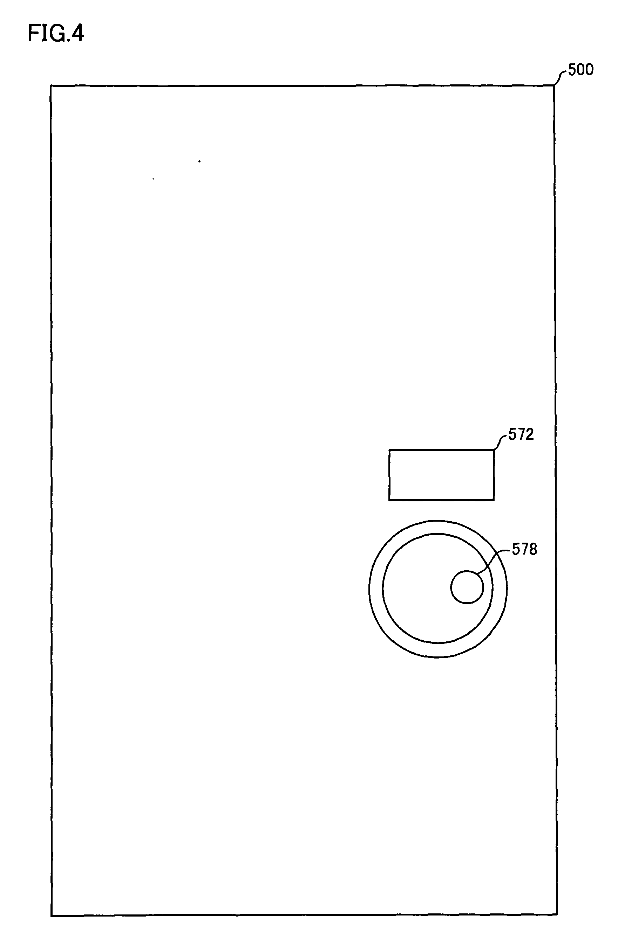

Fig. 4 is a rear view showing the appearance of communication terminal device 500. Referring to Fig. 4, communication terminal device 500 further includes an audio output unit 572 and an image pick-up unit 578. Audio output unit 572 has a function of outputting voice corresponding to a process performed by control unit 510, which will be described later. Audio output unit 572 includes a speaker for outputting voice. Audio output unit 572 outputs voice based on audio data received from control unit 510, which will be described later, through the speaker.

Image pick-up unit 578 has a function of performing an image pick-up process for picking up an image of an object. Image pick-up unit 578 includes an image pick-up lens, a light receiving unit and a color filter unit, all not shown. The light receiving unit has a function of converting input light to an electric signal. The light receiving unit is formed of a plurality of light receiving elements. The light receiving element is, for example, an element using a CCD (Charge Coupled Device) image sensor, a CMOS (Complementary Metal Oxide Semiconductor) image sensor or the like.

The color filter unit is formed of a plurality of color filters. The color filters are filters corresponding to R, G and B, respectively. The plurality of color filters are provided corresponding to each of the plurality of light receiving elements.

In the image pick-up process, the following process is performed. First, at image pick-up unit 578, light reflected from the object of image pick-up enters the pick-up lens, and enters the light receiving unit through color filters. The light receiving unit converts the input light to an electric signal. Image pick-up unit 578 converts the thus converted electric signal to digital data (hereinafter also referred to as picked-up image data).

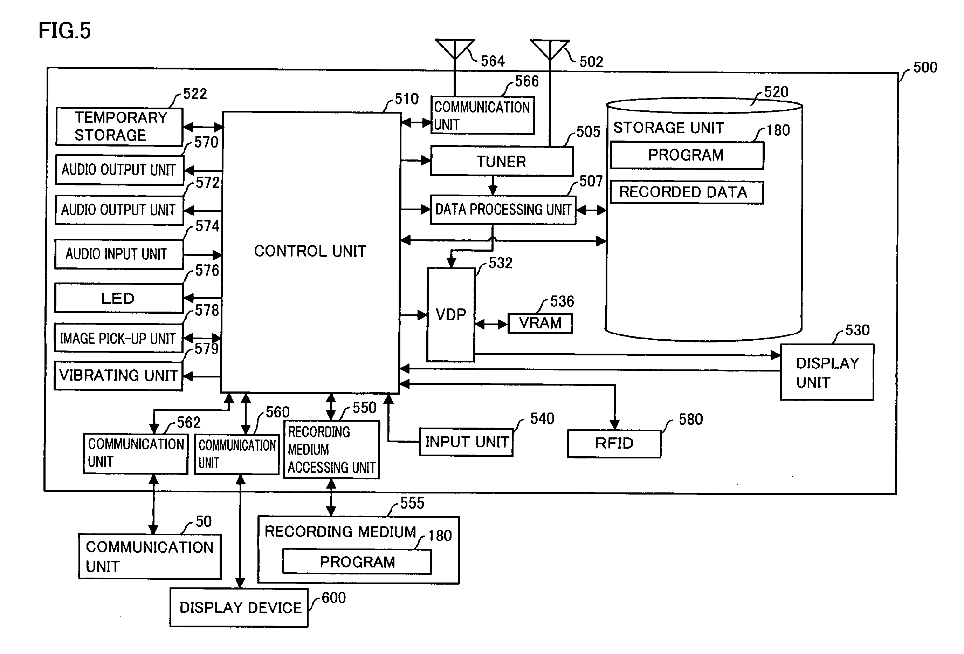

Fig. 5 is a block diagram showing an internal configuration of communication terminal device 500. For convenience of description, a recording medium 555 is also shown in Fig. 5. Recording medium 555 has a program 180, which will be described later, recorded thereon. Specifically, program 180 is recorded on a medium or the like and distributed as a program product. Further, recording medium 555 is also distributed as a program product.

Referring to Fig. 5, communication terminal device 500 further includes a control unit 510, a temporary storage unit 522, and a storage unit 520.

Storage unit 520 has a function of storing data in a non-volatile manner. Storage unit 520 is accessed for data by control unit 510. Storage unit 520 is a medium (for example, a flash memory) that can retain data in a non-volatile manner even when power is off. Storage unit 520 stores a program 180, recorded data as will be described later, and other various types of data. Program 180 includes a remote control program, which will be described later.

Control unit 510 has a function of performing various processes on various units in communication terminal device 500 and performing operations, in accordance with program 180 stored in storage unit 520. Control unit 510 may be any of a microprocessor, FPGA (Field Programmable Gate Array), ASIC (Application Specific Integrated Circuit), DSP (Digital Signal Processor), and other circuits having the operating function.

Temporary storage unit 522 is accessed for data by control unit 510, and used as a work memory that temporarily stores data. Temporary storage unit 522 may be any of RAM (Random Access Memory), SRAM (Static Random Access Memory), DRAM (Dynamic Random Access Memory), SDRAM (Synchronous DRAM), DDR-SDRAM (Double Data Rate SDRAM), RDRAM (Rambus Dynamic Random Access Memory (registered trademark)), Direct-RDRAM (Direct Rambus Dynamic Random Access Memory (registered trademark)), and other circuits having a structure allowing storage of data in a volatile manner.

Communication terminal device 500 further includes an antenna 502, a tuner 505, and a data processing unit 507.

Antenna 502 is connected to tuner 505. Tuner 505 receives, through antenna 502, broadcast signal of a frequency designated by control unit 510. Tuner 505 has a function of receiving broadcast signal of digital broadcast and analogue broadcast.

The broadcast signal includes image data, audio data, text data and EPG (Electric Program Guide) data. If the broadcast signal is of digital broadcast, the broadcast signal further includes BML (Broadcast Markup Language) data. EPG data represents a plurality of pieces of program information. BML data is for controlling operations and arrangement positions of each of the image data, audio data and text data. Tuner 505 transmits the received broadcast signal to data processing unit 507.

Data processing unit 507 demodulates the received broadcast signal, to provide demodulated data. If the received broadcast signal is of analogue broadcast, data processing unit 507 performs the following process. First, data processing unit 507 decodes the demodulated data to obtain image data and audio data, and obtains text data and EPG data from vertical blanking interval (VBI) of the broadcast signal.

Then, receiving a display instruction for displaying an image on display unit 530 from control unit 510, data processing unit 507 transmits the image data to a VDP (Video Display Processor) 532, which will be described later. Receiving the image data, VDP 532 displays an image (moving image or still image) based on the image data, on display unit 530.

Further, receiving a record instruction for performing a recording process from control unit 510, data processing unit 507 compresses image data and audio data and stores as recorded data in storage unit 520. The recorded data here will also be referred to as a content, in the following. The recorded data is data compressed in accordance with MPEG (Moving Picture Experts Group) 4 format. The recorded data is not limited to the data compressed in MPEG4 format, and it may be compressed in accordance with other formats. Here, the other formats include, for example, MPEG1, MPEG2 and H.264.

If the received broadcast signal is of digital broadcast, data processing unit 507 performs the following process. First, data processing unit 507 decodes the demodulated data in accordance with a protocol of digital broadcast, to provide decoded data. The decoded data includes image data, audio data, text data, EPG data, and BML data. The image data and audio data included in the decoded data are data compressed in accordance with MPEG4 format. The image data and audio data included in the decoded data are not limited to data compressed in accordance with MPEG4 format, and the data may be compressed in other formats. Here, the other formats include, for example, MPEG1, MPEG2 and H.264.

Receiving a display instruction for displaying an image on display unit 530 from control unit 510, data processing unit 507 transmits the image data included in the decoded data of the channel designated by the display instruction to VDP 532, which will be described later. Receiving the image data, VDP 532 displays an image (moving image or still image) based on the image data, on display unit 530.

Further, receiving a record instruction for performing a recording process from control unit 510, data processing unit 507 stores the decoded data of the channel designated by the record instruction as recorded data, in storage unit 520. The recorded data here will also be referred to as a content, in the following. The recorded data here includes image data, audio data, text data and BML data.

Communication terminal device 500 further includes VDP 532 and a VRAM (Video Random Access Memory) 536.

VRAM 536 has a function of temporarily storing image data.

Control unit 510 issues a drawing instruction to VDP 532 in accordance with program 180 stored in storage unit 520. The drawing instruction refers to an instruction to generate an image and to display the image on display unit 530.

VDP 532 is connected to display unit 530. VDP 532 reads font data, graphic data and the like from program 180, which will be described later, in storage unit 520 in accordance with the drawing instruction from control unit 510, and generates an image using VRAM 536. Then, VDP 532 reads the image data stored in VRAM 536, and displays an image based on the image data, on display unit 530.

Communication terminal device 500 further includes an input unit 540 and a recording medium accessing unit 550.

Control unit 510 receives, through input unit 540, a button signal that corresponds to a button that is short-pressed or long-pressed, among the plurality of buttons described above, provided on input unit 540. Control unit 510 performs a process corresponding to the received button signal.

Recording medium accessing unit 550 is allowed to access for data to recording medium 555, when recording medium 555 is inserted (loaded) from recording medium inserting unit 550A described above to communication terminal device 500. Consequently, it becomes possible for recording medium accessing unit 550 to read program 180 from recording medium 555 on which program 180 is recorded.

Program 180 stored in recording medium 555 is read by recording medium accessing unit 550 by the install process of control unit 510, and control unit 510 has the program 180 stored in storage unit 520. The program for installing is stored in advance in storage unit 520, and the install process is performed by control unit 510 in accordance with the program for installing.

It is not always necessary that program 180 is installed in storage unit 520. In that case, control unit 510 reads the program 180 stored in recording medium 555 through recording medium accessing unit 550, and performs a prescribed process based on program 180. Further, contents data and the like are also recorded on recording medium 555. Contents data are, for example, music data and moving image data.

Recording medium 555 may be a floppy (registered trademark) disk, CF (Compact Flash (registered trademark)) card, SM (Smart Media (registered trademark)), MMC (Multi Media Card (registered trademark)), SD (Secure Digital (registered trademark)) memory card, a memory stick (registered trademark), xD picture card (registered trademark), or a non-volatile memory other than those listed above.

Communication terminal device 500 further includes communication units 560 and 562.

Communication unit 560 transmits/receives data to/from control unit 510. Further, communication unit 560 has a function of transmitting/receiving data to/from video display device 600 in wireless or wired manner.

Communication unit 560 has a function of communication interface for performing serial transfer in accordance with USB (Universal Serial Bus) 1.1 or USB2.0 standard. The communication interface standard for serial transfer is not limited to USB1.1 or USB2.0, and other standard may be applied.

Communication unit 560 may have a function of communication interface for parallel transfer. The communication interface for parallel transfer is, for example, an interface in accordance with Centronics-compliant standard or IEEE 1284 (Institute of Electrical and Electronic Engineers 1284) standard. Communication unit 560 may have a function of communication interface based on IEEE1394 or SCSI standard.

Further, communication unit 560 has a function of wireless data communication. Wireless data communication function involves a function of data communication in wireless manner using Bluetooth (registered trademark). The wireless data communication is not limited to the method using Bluethooth (registered trademark), and other communication method, for example, one using infrared ray, may be used. Communication unit 560 performs wireless data communication to/from video display device 600 in response to a control instruction from control unit 510.

Communication unit 562 transmits/receives data to/from control unit 510. Communication unit 562 has a function of data communication utilizing wireless technique based on any of IEEE802.11a, IEEE802.11b and IEEE802.11g, which are standards for wireless LAN. The wireless technique is not limited to one based on any of IEEE802.11a, IEEE802.1 1b and IEEE802.11g, and other wireless technique may be used. Thus, communication unit 562 is capable of data communication with communication unit 50.

Further, communication unit 562 has a function of communication interface utilizing Ethernet (registered trademark). Therefore, communication unit 562 is capable of data communication with communication unit 50 through, for example, a LAN cable.

Therefore, communication terminal device 500 in accordance with the present embodiment is capable of downloading a program from network 70 through communication units 50 and 562, and storing it in storage unit 520. Here, the downloaded program is the program 180.

Control unit 510 performs a prescribed process in accordance with the program (program 180) downloaded from network 70. The downloading program is stored in advance in storage unit 520, and the downloading process is performed by control unit 510 based on the downloading program.

Communication terminal device 500 further includes an antenna 564 and a communication unit 566.

Antenna 564 is connected to communication unit 566. Communication unit 566 has a function of transmitting/receiving radio communication signals using antenna 564. Communication unit 566 receives a radio communication signal of a frequency designated by control unit 510, through antenna 564. Radio communication signal is a signal including audio data, character data and image data.

Communication unit 566 communicates with a closest base station, not shown, by the radio communication signal, using antenna 564. The closest base station can communicate with telephone network 60. Therefore, communication unit 566 communicates with telephone network 60 through the closest base station, by the radio communication signal, using antenna 564. Receiving the radio communication signal, communication unit 566 demodulates the radio communication signal, and transmits data based on the demodulated radio communication signal, to control unit 510. Further, when a radio communication signal is to be transmitted, communication unit 566 receives data (for example, audio data) from control unit 510, and converts the data to a radio communication signal in accordance with a prescribed protocol. Then, communication unit 566 transmits the converted radio communication signal through the closest base station, not shown, to telephone network 60, using antenna 564.

Communication unit 566 can also obtain information indicating the position of base station (hereinafter also referred to as base station position information), through communication with the closest base station. Communication unit 566 transmits the obtained base station position information to control unit 510, in response to a control instruction from control unit 510. Based on the received base station position information, control unit 510 can roughly grasp the position of communication terminal device 500.

Further, communication unit 566 has a GPS (Global Positioning System) function. GPS function refers to a function of obtaining information (hereinafter also referred to as GPS position information) related to the position (based on longitude, latitude, altitude and the like) of communication terminal device 500, by communication with an artificial satellite. Communication unit 566 obtains the GPS position information in response to a control instruction from control unit 510, and transmits it to control unit 510.

Control unit 510 performs data communication with audio output units 570 and 572 and audio input unit 574 mentioned above.

When control unit 510 transmits audio data to audio output unit 570, audio output unit 570 outputs voice based on the audio data received from control unit 510, from the speaker. When control unit 510 transmits audio data to audio output unit 572, audio output unit 572 outputs voice based on the audio data received from control unit 510, from the speaker.

When the user puts his/her voice to a microphone included in audio input unit 574, audio input unit 574 converts the voice picked-up by the microphone to audio data, and transmits the audio data to control unit 510.

Control unit 510 performs data communication with LED 576 and image pick-up unit 578 described above. LED 576 emits light based on a control instruction from control unit 510.

Image pick-up unit 578 performs the image pick-up process described above based on a control instruction from control unit 510, and transmits the picked-up image data to control unit 510. Receiving the picked-up image data, control unit 510 stores the picked-up image data in any of temporary storage unit 522, storage unit 520 and recording medium 555.

Communication terminal 500 further includes a vibration unit 579. Vibration unit 579 has a function of vibrating communication terminal device 500 based on a control instruction from control unit 510. Vibration unit 579 vibrates communication terminal device 500 based on the control instruction from control unit 510 at the time of, for example, receiving an incoming telephone call or an electronic mail.

Communication terminal device 500 further includes an RFID 580. RFID 580 is an integrated circuit in accordance with RFID (Radio Frequency Identification) having a security function, for example, of FeliCa (registered trademark), and it communicates with a reading terminal, not shown, in a non-contact manner. Further, RFID 580 outputs data such as a terminal ID, based on a control instruction from control unit 510.

### (Video Display Device)

Next, video display device 600 will be described in detail.

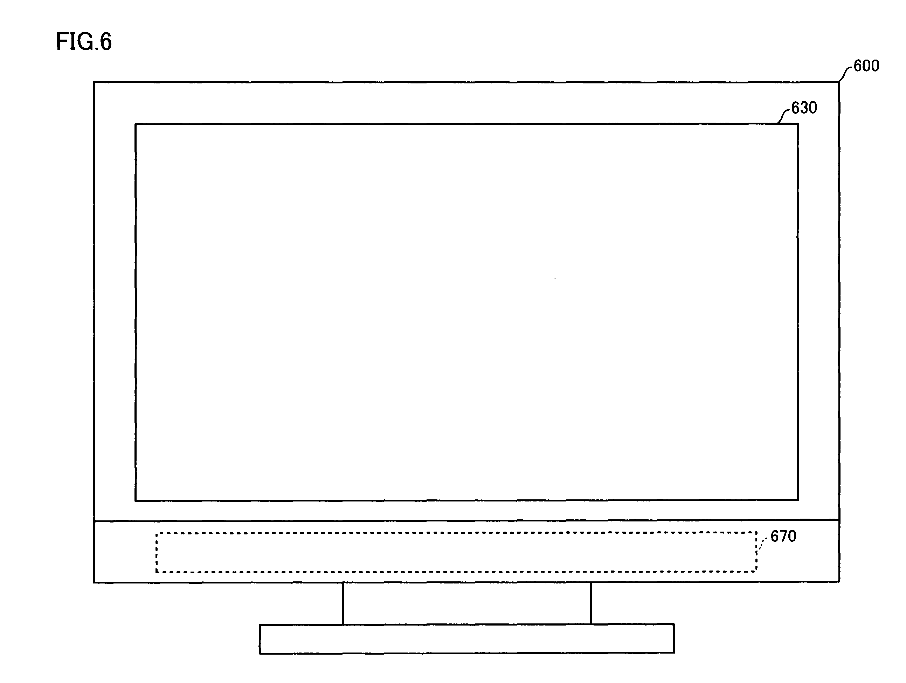

Fig. 6 is a front view showing the appearance of video display device 600. Referring to Fig. 6, video display device 600 includes a display unit 630 and an audio output unit 670.

Display unit 630 has a function of displaying characters, images and the like. Display unit 630 uses any of an LCD panel, CRT (Cathode Ray Tube), FED panel, PDP (Plasma Display Panel) and organic EL display panel. Display unit 630 may be a device using a panel of display method other than those mentioned above. The size of an image that can be displayed on display unit 630 is larger than the size of an image that can be displayed on display unit 530. Further, resolution of display unit 630 is higher than that of display unit 530. By way of example, resolution of display unit 630 is width 1366 (dots) × length 768 (dots), which allows display of a PC image. The resolution of display unit 630 is not limited to width 1366 (dots) × length 768 (dots), and it may be different (for example, 1024 × 768). The aspect ratio of the portion displaying the video image on display unit 630 is 16:9. The aspect ratio is not limited to 16:9, and it may be, for example, 4:3.

Audio output unit 670 has a function of outputting voice that corresponds to the process performed by a control unit 610, which will be described later. Audio output unit 670 includes a speaker for outputting voice. Audio output unit 670 outputs voice based on audio data received from control unit 610, which will be described later, through the speaker.

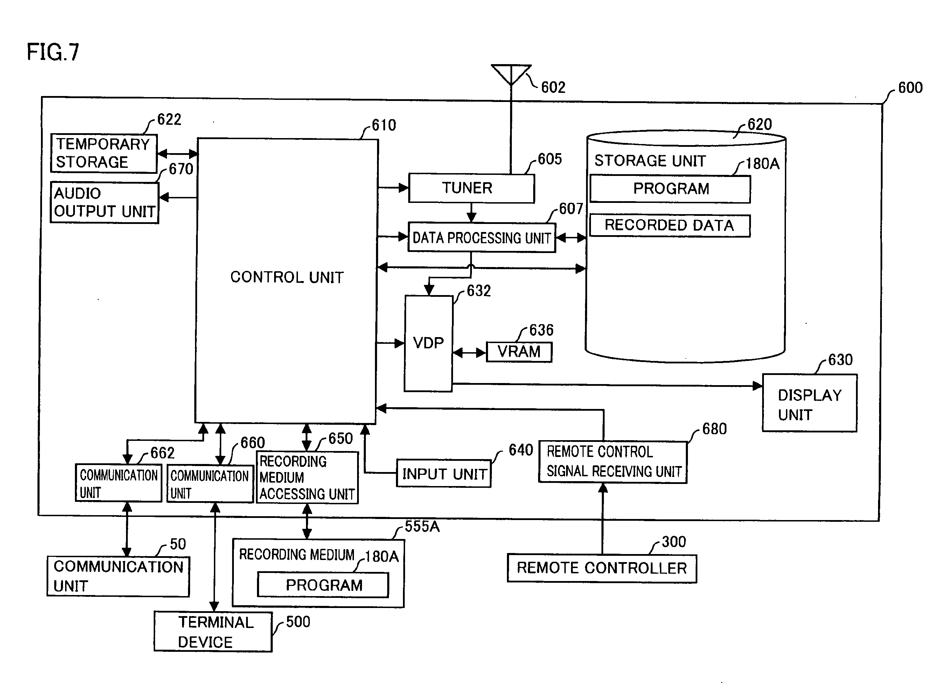

Fig. 7 is a block diagram showing an internal configuration of video display device 600. For convenience of description, Fig. 7 also shows a recording medium 555A. Recording medium 555A has a program 180A, which will be described later, recorded thereon. Specifically, program 180A is recorded on a medium or the like and distributed as a program product. Further, recording medium 555A is also distributed as a program product.

Referring to Fig. 7, video display device 600 further includes control unit 610, a temporary storage unit 622, and a storage unit 620.

Storage unit 620 has a function of storing data in a non-volatile manner. Storage unit 620 is accessed for data by control unit 610. Storage unit 620 is a hard disk capable of storing a large capacity of data. Storage unit 620 is not limited to a hard disk, and it may be any medium that can retain data in a non-volatile manner even if power supply is off (for example, a flash memory). Storage unit 620 stores program 180A, recorded data as will be described later, a device ID for identifying video display device 600, and various other data.

Control unit 610 has a function of performing various processes on various units in video display device 600 and performing operations, in accordance with program 180A stored in storage unit 620. Control unit 610 is similar to control unit 510 described above and, therefore, detailed description thereof will not be repeated.

Temporary storage unit 622 is accessed for data by control unit 610, and used as a work memory that temporarily stores data. Temporary storage unit 622 is similar to temporary storage unit 522 described above and, therefore, detailed description thereof will not be repeated.

Video display device 600 further includes an antenna 602, a tuner 605, and a data processing unit 607.

Antenna 602 is connected to tuner 605. Tuner 605 receives, through antenna 602, broadcast signal of a frequency designated by control unit 610. Tuner 605 has a function of receiving broadcast signal of digital broadcast and analogue broadcast.

The broadcast signal includes image data, audio data, text data and EPG data. If the broadcast signal is of digital broadcast, the broadcast signal further includes BML data and the like described above. Tuner 605 transmits the received broadcast signal to data processing unit 607.

Data processing unit 607 demodulates the received broadcast signal, to provide demodulated data. If the received broadcast signal is of analogue broadcast, data processing unit 607 performs the following process. First, data processing unit 607 decodes the demodulated data to obtain image data and audio data, and obtains text data and EPG data from vertical blanking interval of the broadcast signal.

Then, receiving a display instruction for displaying an image on display unit 630 from control unit 610, data processing unit 607 transmits the image data to a VDP 632, which will be described later. Receiving the image data, VDP 632 displays an image (moving image or still image) based on the image data, on display unit 630.

Further, receiving a record instruction for performing a recording process from control unit 610, data processing unit 607 compresses image data and audio data and stores the data as recorded data, in storage unit 620. The recorded data are data compressed in accordance with MPEG2 format. The recorded data is not limited to the data compressed in MPEG2 format, and it may be compressed in accordance with other formats. Here, the other formats include, for example, MPEG1 and H.264.

If the received broadcast signal is of digital broadcast, data processing unit 607 performs the following process. First, data processing unit 607 decodes the demodulated data in accordance with a protocol of digital broadcast, to provide decoded data. The decoded data includes image data, audio data, text data, EPG data, and BML data. The image data and audio data included in the decoded data are data compressed in accordance with MPEG2 format. The image data and audio data included in the decoded data are not limited to data compressed in accordance with MPEG2 format, and the data may be compressed in other formats. Here, the other formats include, for example, MPEG1 and H.264.

Receiving a display instruction for displaying an image on display unit 630 from control unit 610, data processing unit 607 transmits the image data included in the decoded data of the channel designated by the display instruction to VDP 632, which will be described later. Receiving the image data, VDP 632 displays an image (moving image or still image) based on the image data, on display unit 630.

In the following, the image based on the broadcast signal received by tuner 605 and displayed on display unit 630 will be also referred to as a TV image. It is assumed that the number of channel types of TV images that can be selected directly by pressing numeral buttons "1" to "12" provided on a remote controller 300, which will be described later, for operating video display device 600 is up to 12. Naturally, if the number of numeral buttons provided on remote controller 300 increases, the number of channel types that can be directly selected increases.

To numeral buttons "1" to "12" of remote controller 300, remote controller channel numbers "1" to "12" are set. For example, to the numeral button "3", remote control channel number "3" is set. Further, it is possible to register one channel of TV image for one remote control channel number. For instance, assume that TV image channel number "8" is registered for remote control channel number "1". Then, when the user presses the numeral button "1" of remote controller 300, a remote control signal for selecting TV image of channel number "8" is transmitted from remote controller 300 to video display device 600.

Further, video display device 600 has a function of simultaneously displaying a plurality of different types of TV images on display unit 630. Further, video display device 600 has a function of displaying a TV image and an image of a different type, simultaneously on display unit 630.

Receiving a record instruction for performing a recording process from control unit 610, data processing unit 607 stores the decoded data of the channel designated by the record instruction as recorded data, in storage unit 620. The recorded data here will also be referred to as a content, in the following. The recorded data here includes image data, audio data, text data and BML data.

Video display device 600 further includes a VDP 632 and a VRAM 636.

VRAM 636 has a function of temporarily storing image data.

Control unit 610 issues a drawing instruction to VDP 632 in accordance with program 180A stored in storage unit 620. The drawing instruction refers to an instruction to generate an image and to display the image on display unit 630.

VDP 632 is connected to display unit 630. VDP 632 reads font data, graphic data and the like from program 180A, which will be described later, in storage unit 620 in accordance with the drawing instruction from control unit 610, and generates an image using VRAM 636. Then, VDP 632 reads the image data stored in VRAM 636, and displays an image based on the image data, on display unit 630.

Video display device 600 further includes an input unit 640 and a recording medium accessing unit 650.

Input unit 640 includes a plurality of buttons, not shown. The plurality of buttons are provided on the outside of video display device 600. When any of the plurality of buttons is pressed by the user, input unit 640 transmits a button signal corresponding to the pressed button, to control unit 610. Control unit 610 performs a process corresponding to the received button signal. In the following, a user operation of a button on input unit 640 will also be referred to as interface operation T.

Recording medium accessing unit 650 has a function of reading program 180A from recording medium 555A, on which program 180A is recorded. Program 180A stored in recording medium 555A is read by recording medium accessing unit 650 by the install process of control unit 610, and control unit 610 has the program 180A stored in storage unit 620. The program for installing is stored in advance in storage unit 620, and the install process is performed by control unit 610 in accordance with the program for installing.

It is not always necessary that program 180A is installed in storage unit 620. In that case, control unit 610 reads the program 180A stored in recording medium 555A through recording medium accessing unit 650, and performs a prescribed process based on program 180A. Further, contents data and the like are also recorded on recording medium 555A. Contents data are, for example, music data and moving image data.

Recording medium 555A may be a Blue-ray Disc (registered trademark), HD-DVD (High-Definition Digital Versatile Disc) (registered trademark), DVD-ROM (Digital Versatile Disk Read Only Memory), DVD-R (Digital Versatile Disk Recordable), DVD-RAM (Digital Versatile Disk Random Access Memory), DVD+RW (Digital Versatile Disk Re-Writable), DVD-RW, CD-ROM (Compact Disk Read Only Memory), MO (Magneto Optical Disk), floppy (registered trademark) disk, CF card (registered trademark), SM (Smart Media (registered trademark)), MMC (registered trademark), SD memory card (registered trademark), memory stick (registered trademark), xD picture card, USB memory, magnetic tape or a non-volatile memory other than those listed above.

Video display device 600 further includes a communication unit 660 and a communication unit 662.

Communication unit 660 transmits/receives data to/from control unit 610. Further, communication unit 660 has a function of transmitting/receiving data to/from communication terminal device 500 in wireless or wired manner. Communication unit 660 has a configuration and functions similar to those of communication unit 560 described above and, therefore, detailed description thereof will not be repeated

Communication unit 662 transmits/receives data to/from control unit 610. Communication unit 662 has a configuration and functions similar to those of communication unit 562 described above and, therefore detailed description thereof will not be repeated. Therefore, it is possible for communication unit 662 to perform data communication with communication unit 50 in wireless manner. Further, communication unit 662 is capable of data communication with communication unit 50 through, for example, an LAN cable.

Therefore, video display device 600 in accordance with the present embodiment is capable of downloading a program from network 70 through communication units 50 and 662, and storing it in storage unit 620. Here, the downloaded program is the program 180A.

Control unit 610 performs a prescribed process in accordance with a program (program 180A) downloaded from network 70. The downloading program is stored in advance in storage unit 620, and the downloading process is performed by control unit 610 based on the downloading program.

Video display device 600 further includes a remote control signal receiving unit 680. Remote control signal receiving unit 680 has a function of receiving a remote control signal for operating video display device 600, output from remote (remote controller) 300. Remote control signal receiving unit 680 transmits the received remote control signal to control unit 610. Control unit 610 performs a corresponding process in accordance with the received remote control signal. As described above, remote controller 300 is provided with numeral buttons "1" to "12" for selecting TV image. In the following, a user operation of remote controller 300 is also referred to as interface operation T.

It is also possible to assume that communication terminal device 500 described above has a function of remote controller 300, and that both of or only one of communication terminal device 500 and remote controller 300 may exist.

Control unit 610 performs data communication with audio output unit 670 described above. When control unit 610 transmits audio data to audio output unit 670, audio output unit 670 outputs voice based on the audio data received from control unit 610 from the speaker.

### (Service Server, Search Server and Web Server)

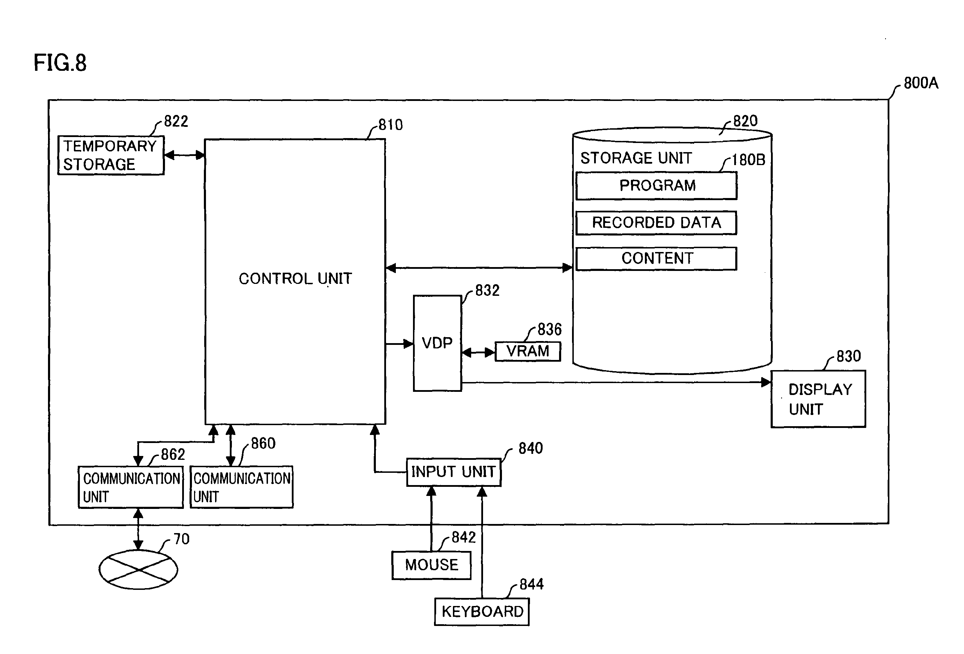

Fig. 8 is a block diagram showing an internal configuration of a service server 800A. Referring to Fig. 8, service server 800A includes a display unit 830, a control unit 810, a temporary storage unit 822 and a storage unit 820.

Display unit 830 has a function of displaying characters, images and the like. Display unit 830 is similar to display unit 630 described above and, therefore, detailed description thereof will not be repeated.

Storage unit 820 has a function of storing data in a non-volatile manner. Storage unit 820 is accessed for data by control unit 810. Storage unit 820 is a hard disk capable of storing a large capacity of data. Storage unit 820 is not limited to a hard disk, and it may be any medium that can retain data in a non-volatile manner even if power supply is off (for example, a flash memory). Storage unit 820 stores a program 180B, recorded data, contents data, and various other data.

Control unit 810 has a function of performing various processes on various units in service server 800A and performing operations, in accordance with program 180B stored in storage unit 820. Control unit 810 is similar to control unit 510 described above and, therefore, detailed description thereof will not be repeated.

Temporary storage unit 822 is accessed for data by control unit 810, and used as a work memory that temporarily stores data. Temporary storage unit 822 is similar to temporary storage unit 522 described above and, therefore, detailed description thereof will not be repeated.

Service server 800A further includes a VDP 832 and a VRAM 836.

VRAM 836 has a function of temporarily storing image data.

Control unit 810 issues a drawing instruction to VDP 832 in accordance with program 180B stored in storage unit 820. The drawing instruction refers to an instruction to generate an image and to display the image on display unit 830.

VDP 832 is connected to display unit 830. VDP 832 reads font data, graphic data and the like from program 180B, which will be described later, in storage unit 820 in accordance with the drawing instruction from control unit 810, and generates an image using VRAM 836. Then, VDP 832 reads the image data stored in VRAM 836, and displays an image based on the image data, on display unit 830.

Service server 800A further includes an input unit 840.

To input unit 840, a mouse 842 and a keyboard 844 are connected. The user applies an instruction to service server 800A using mouse 842 or keyboard 844. The input instruction from mouse 842 or keyboard 844 is transmitted through input unit 840 to control unit 810. Control unit 810 performs a prescribed process based on the input instruction from input unit 840.

Service server 800A further includes a communication unit 860 and a communication unit 862.

Communication unit 860 transmits/receives data to/from control unit 810. Further, communication unit 860 has a function of transmitting/receiving data to/from another device, not shown, in wired or wireless manner. Communication unit 860 has a configuration and functions similar to communication unit 560 described above and, therefore, detailed description thereof will not be repeated.

Communication unit 862 transmits/receives data to/from control unit 810. Communication unit 862 has a configuration and functions similar to communication unit 562 described above and, therefore, detailed description thereof will not be repeated. Therefore, communication unit 862 is capable of data communication with network 70 in wireless manner. Further, communication unit 862 is capable of data communication with network 70 through, for example, an LAN cable.

Each of search server 800S and Web server 800W has the same configuration as service server 800A described above and, therefore, detailed description thereof will not be repeated.

Next, a process for using communication terminal device 500 as a remote controller for operating video display device 600 (hereinafter also referred to as a display device remote controller) will be described. When control unit 510 executes a remote control program of program 180 in response to interface operation M, it becomes possible to use communication terminal device 500 as the display device remote controller. In this case, the following remote controller image MG100 is displayed on display unit 530.

### (Remote Controller)

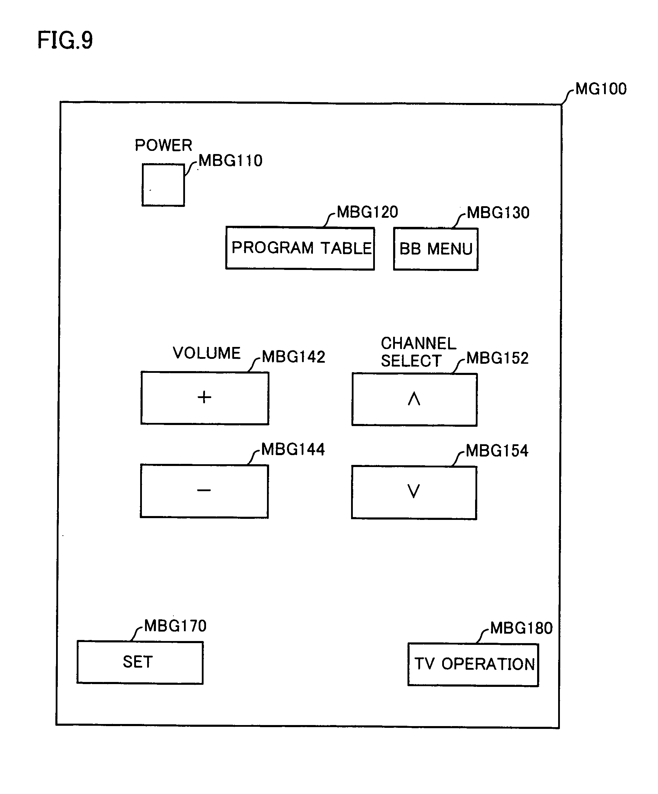

Fig. 9 shows an example of remote controller image MG 100. Referring to Fig. 9, on remote controller image MG 100, button images MBG110, MBG120 and MBG130 are arranged.

The button images MBG110, MBG120 and MBG130 are button images causing control unit 510 to transmit, when pressed by the interface operation M, the corresponding remote control signals, which will be described later, to video display device 600 through communication unit 560, respectively.

Button image MBG110 is a button image for transmitting a power remote control signal to video display device 600 when pressed by the interface operation M. It is noted that video display device 600 has a standby mode. In the standby mode, an image cannot be displayed on display unit 630 because power for displaying an image on display unit 630 is off, while the main power is on. Specifically, the standby mode refers to a state where main power is not off while no image is displayed on display unit 630. In the following, the power for displaying an image on display unit 630 will be also referred to as an image display power.

Therefore, if video display device 600 is in the standby mode, the image display power is turned on upon reception of the power remote control signal and, therefore, it becomes possible to display an image on display unit 630. In the following, video display device 600 with the image display power being on may be referred to as in the normal mode. Specifically, the power remote control signal is for switching the standby mode and the normal mode of video display device 600.

Button image MBG120 is a button image for transmitting a program table display remote control signal to video display device 600 when pressed by the interface operation M. The program table display remote control signal is a remote control signal for displaying a program table image on display unit 630 of video display device 600.

Button image MBG130 is a button image for transmitting a menu display remote control signal to video display device 600 when pressed by the interface operation M. The menu display remote control signal is a remote control signal for displaying a menu image, which will be described later, on display unit 630 of video display device 600.

Further, on remote controller image MG 100, button images MBG142, MBG144, MBG152 and MBG154 are arranged. The button images MBG142, MBG144, MBG152 and MBG154 are button images causing control unit 510 to transmit, when pressed by the interface operation M, the corresponding remote control signals, which will be described later, to video display device 600 through communication unit 560, respectively.

Button image MBG142 is a button image for transmitting a volume up remote control signal to video display device 600 when pressed by the interface operation M. The volume up remote control signal is a remote control signal for increasing the sound volume output from audio output unit 670 of video display device 600. Button image MBG144 is a button image for transmitting a volume down remote control signal to video display device 600 when pressed by the interface operation M. The volume down remote control signal is a remote control signal for decreasing the sound volume output from audio output unit 670 of video display device 600.

Button image MBG152 is a button image for transmitting a channel plus remote control signal to video display device 600 when pressed by the interface operation M. Channel plus remote control signal is a remote control signal for incrementing by one, the remote control channel number described above, when TV image is displayed on display unit 630 of video display device 600. When remote control channel number is "12" and the process of incrementing by one takes place, the remote control channel number is set to "1".

Button image MBG154 is a button image for transmitting a channel minus remote control signal to video display device 600 when pressed by the interface operation M. Channel minus remote control signal is a remote control signal for decrementing by one, the remote control channel number described above, when TV image is displayed on display unit 630 of video display device 600. When remote control channel number is "1" and the process of decrementing by one takes place, the remote control channel number is set to "12".

Further, button images MBG170 and MBG180 are arranged on remote controller image MG 100. Button images MBG170 and MBG180 are button images causing control unit 510 to transmit, when pressed by the interface operation M, the corresponding remote control signals, which will be described later, to video display device 600 through communication unit 560, respectively.

Button image MBG170 is a button image for transmitting a setting image display remote control signal to video display device 600 when pressed by the interface operation M. The setting image display remote control signal is a remote control signal for displaying a setting image, which will be described later, on display unit 630 of video display device 600. Button image MBG180 is a button image for transmitting a detailed remote controller image display remote control signal to video display device 600 when pressed by the interface operation M. The detailed remote controller image display remote control signal is a remote control signal for displaying a detailed image of remote controller, on display unit 630 of video display device 600. The detailed image of remote controller is an image allowing transmission, to video display device 600, of remote control signals other than those used frequently for video display device 600.

In the following, an operation mode of communication terminal device 500 in which the communication terminal device 500 is capable of operating video display device 600 by transmitting a remote control signal to video display device 600 will be referred to as a remote control mode.

### (Content Processing)

Next, a process performed by video display device 600 for displaying a content (hereinafter also referred to as a content handling process) will be described. It is assumed that the video display device 600 is in the standby mode. As described above, the standby mode refers to a state in which no image is displayed on display unit 630 while the main power is not off. It is assumed that video display device 600 is capable of data communication with communication unit 50 even in the standby mode, and the following process takes place.

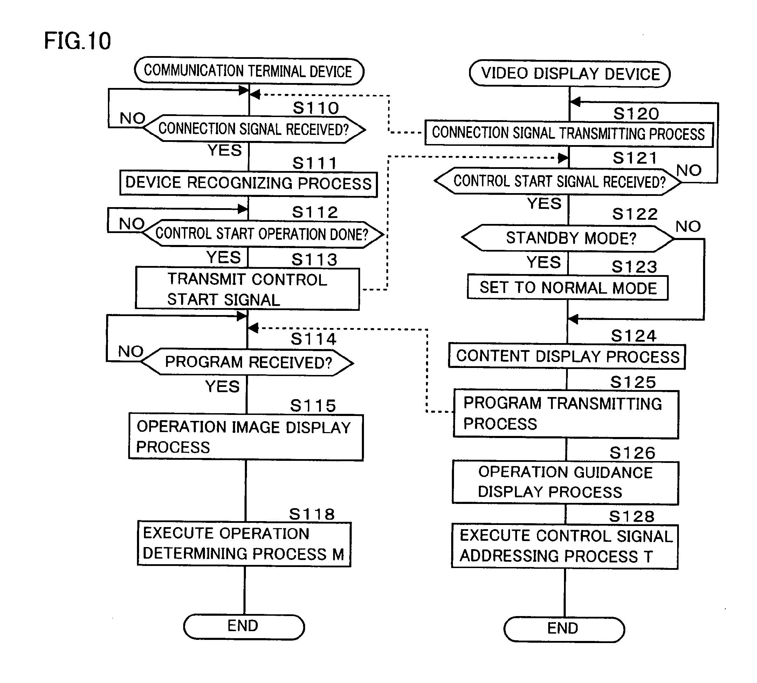

Fig. 10 is a flowchart representing the content handling process. Fig. 10 shows a process performed in each of communication terminal device 500 and video display device 600. It is assumed that prior to the content handling process, control unit 510 in communication terminal device 500 controls tuner 505 and data processing unit 507 such that an image based on a broadcast signal (in the following, also referred to as TV image) is displayed on display unit 530. Therefore, a TV image is being displayed on display unit 530. The TV image displayed on display unit 530 is, for example, a TV image of channel 3. Further, it is assumed that the voice corresponding to the TV image displayed on display unit 530 is output from audio output unit 572 of communication terminal device 500.

The image displayed on display unit 530 is not limited to a TV image, and it may be an image based on a content received by communication terminal device 500 from service server 800A (hereinafter referred to as content image). In that case, voice corresponding to the content image displayed on display unit 530 is output from audio output unit572.

Referring to Fig. 10, in video display device 600, first, the process of step S120 is performed.

At step S120, a connection signal transmitting process is performed. In the connection signal transmitting process, control unit 610 transmits a connection signal by wireless data communication function. The wireless data communication function is, for example, communication function utilizing Bluetooth (registered trademark). The connection signal includes a device ID of video display device 600. Here, the device ID represents information for identifying a device (hereinafter referred to as a device identifying information). The device ID of video display device 600 is, by way of example, assumed to be "11TA". The connection signal transmitted by the above-described process is assumed to reach the range of 10 m in radius from the position where the video display device 600 is provided. Specifically, a device in the range of 10 m in radius from the position where the video display device 600 is provided (hereinafter also referred to as a connection signal coverage) can receive the connection signal. Here, it is assumed that communication terminal device 500 is powered on and in the connection signal coverage. Then, the process of step S 120 ends.

In communication terminal device 500, first, the process of step S 110 is performed.

At step S110, control unit 510 determines whether or not data communication with video display device 600 is possible. Specifically, control unit 510 determines whether or not data communication is possible with the video display device 600 arranged at a position where the distance between the communication terminal device 500 and the video display device 600 is equal to or smaller than a prescribed distance. Specifically, whether or not control unit 510 has received the connection signal is determined. If it is YES at step S 110, control proceeds to step S111. If it is NO at step S 110, the process of step S 110 is again performed. Here, it is assumed that the connection signal has been received, and the control proceeds to step S111. It is determined YES at step S 110 when control 510 determines that data communication with video display device 600 is possible.

At step S111, a device recognizing process is performed. In the device recognizing process, control unit 510 performs the process with reference to device specifying data D 100, which will be described in the following. The device specifying data D100 is for specifying the device based on the received device ID. Device specifying data D 100 is stored in advance in storage unit 520.

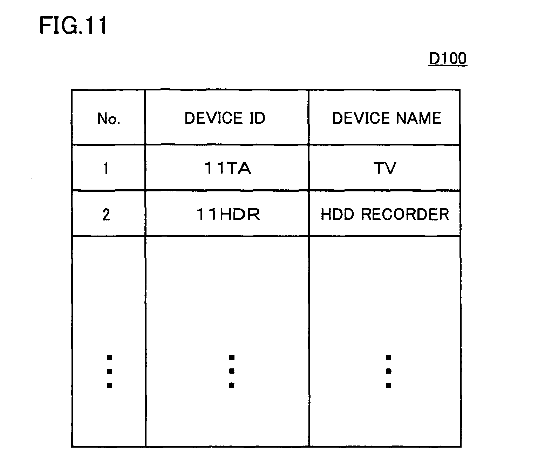

Fig. 11 shows an example of device specifying data D 100. Referring to Fig. 11, device specifying data D100 includes a plurality of pieces of device specifying information. In device specifying data D100, "No." represents a number for managing each of the plurality of pieces of device specifying information. "Device ID" represents an ID for specifying (identifying) the device. "Device name" represents the name of device specified by the "Device ID". For example, the device name of a device having device ID of "11HDR" is "HDD recorder."

Again referring to Fig. 10, in the device recognizing process of step S111, control unit 510 refers to the device specifying data D100 stored in storage unit 520, and by the device ID included in the received connection signal, recognizes the name of the device that transmitted the connection signal. Here, the device ID included in the connection signal is "11TA" and, therefore, control unit 510 recognizes that the device name of the device that transmitted the connection signal is "TV."

Then, control unit 510 generates the following device recognizing image MG200, displaying an icon with recognized device name displayed overlapped on the TV image utilizing VDP 532, and displays the generated device recognizing image MG200 on display unit 530.

Then, control unit 510 causes LED 576 to emit, for example, blue light. The blue light indicates, for example, a state in which data communication with video display device 600 is possible. Then, the process of step S111 ends.

In the present embodiment, the state of communication is indicated by the LED. The indication of communication state, however, is not limited to the method using LED. For instance, communication state may be indicated by displaying state of communication on a part of the image displayed on display unit 530 of communication terminal device 500.

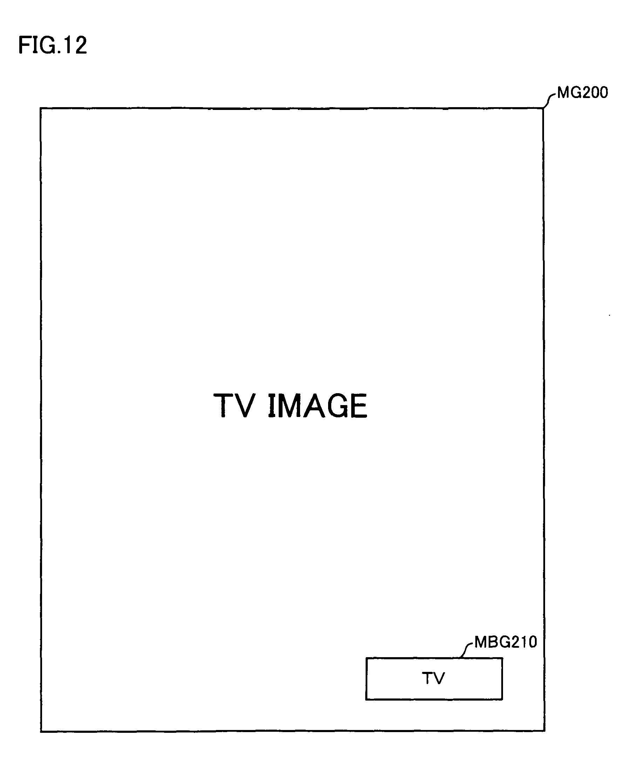

Fig. 12 shows an example of device recognizing image MG 200. Referring to Fig. 12, device recognizing image MG 200 is a TV image on which a button image MBG210 as an icon is arranged.

On button image MBG210, the device name recognized by control unit 510 is displayed. Further, button image MBG210 is a button image for transmitting a control start signal as the control signal to the device having the device ID corresponding to the device name, when pressed by the interface operation M. The control start signal is a signal for setting the device in the standby mode to the normal mode. Here, the device name displayed on button image MBG210 is "TV" and, therefore, the corresponding device ID is "11TA", and the control start signal is transmitted to video display device 600 when button image MGB 210 is pressed.

Again referring to Fig. 11, after the process of step S111, control proceeds to step S112.

At step S112, control unit 510 determines whether or not there is a control start operation. The control start operation is the interface operation M of pressing button image MGB 210. If it is YES at step S112, control proceeds to step S113. If it is NO at step S112, the process of step S112 is performed again. Here, it is assumed that the control start operation has been made, and control proceeds to step S113.

At step S113, control unit 510 transmits the control start signal as the control signal to the device that transmitted the connection signal. Here, the device that transmitted the connection signal is video display device 600 and, therefore, control unit 510 transmits the control start signal as the control signal to video display device 600. The transmitted control start signal includes content information.

Content information includes content specifying information and content sound volume information. Content specifying information is for specifying the content displayed on display unit 530. Content sound volume information is for indicating the sound volume of content displayed on display unit 530. It is assumed that the sound volume value of content displayed on display unit 530 is indicated by a numerical value of "0" to "20". If the volume is "0", it means that the sound volume of content displayed on display unit 530 is zero.

Here, it is assumed that a TV image of channel 3 based on broadcast signal is displayed on display unit 530. Here, the content displayed on display unit 530 is the TV image of channel 3. Therefore, the content specifying information is information indicating channel 3. Further, it is assumed that the sound volume of TV image displayed on display unit 530 is, for example, "10". Therefore, the content sound volume information is information indicating the sound volume "10".

If the content image based on the content received from service server 800A is displayed on display unit 530, the identification information for specifying the received content serves as the content specifying information. Further, the sound volume value of content image is the content sound information.

Further, the transmitted control start signal includes the device ID ("11TA") included in the received connection signal, and the device ID of communication terminal device 500. The device ID of communication terminal device 500 is, for example, "11MA". Then, the process of step S13 ends.

After the process of step S120, control of video display device 600 proceeds to step S121. At step S121, control unit 610 determines whether or not the control start signal including device ID of itself has been received. If it is YES at step S121, control proceeds to step S122. If it is NO at step S121, the process is suspended for a prescribed time period (for example, 10 sec.), and the process of step S120 is again performed. Specifically, control unit 610 continuously transmits the connection signal to a device within the coverage of connection signal at a prescribed time interval, until the control start signal is received. Here, it is assumed that the control start signal including the device ID (" 11 TA") of itself and the device ID (" 11MA") of communication terminal device 500 is received, and the control proceeds to step S122.

At step S122, control unit 610 determines whether or not the video display device 600 in which it is provided, is in the standby mode. If it is YES at step S122, control proceeds to step S123. If it is NO at step S122, control proceeds to step S124. Here, it is assumed that video display device 600 is in the standby mode, and control proceeds to step S123. It is NO at step S122 if video display device 600 is set in the normal mode.

At step S123, control unit 610 turns on the image display power described above, and sets the video display device 600 to the normal mode. Thus, image display on display unit 630 becomes possible. Then, control proceeds to step S124.

At step S124, content display process is performed. In the content display process, control unit 610 displays the content based on the content specifying information included in the content information of the received control start signal, on display unit 630, utilizing VDP 632. Further, control unit 610 outputs the voice of content displayed on display unit 630, in a volume based on the sound volume value indicated by content volume information included in the content information of the received control start signal, from audio input unit 670.

Here, the content based on the content specifying information displayed on display unit 630 is the TV image of channel 3 based on the broadcast signal. Control unit 610 provides display of TV image of channel 3 based on the broadcast signal on display unit 630, also using data processing unit 607. If it is the case that the TV image of channel 3 has been displayed on display unit 630 before executing the process of step S124, the image displayed on display unit 630 remains unchanged.

Further, the sound volume indicated by the content volume information is "10". Therefore, the sound volume of voice of the content displayed on display unit 630 output from audio output unit 670 corresponds to the volume based on the sound volume value "10" indicated by the content volume information.

It is noted that the sound volume value of voice of content displayed on display unit 630 need not be the same as the sound volume value "10" indicated by the content volume information. Then, the volume output from audio output unit 670 of video display device 600 is set by control unit 610 based on the sound value indicated by the content volume information, such that the volume of voice output from audio output unit 670 of video display device 600 is k (natural number not smaller than 1 (for example, 2)) times the volume of voice output from the audio output unit 572 of communication terminal device 500.

If the content specifying information is the information for identifying the content received from service server 800A, control unit 610 receives the content specified by the content specifying information from service server 800A, and displays the received content on display unit 630. Further, in this case, control unit 610 outputs the voice of content displayed on display unit 630 from audio output unit 670, with the volume indicated by the content volume information. Then the process of step S124 ends.

By the processes above, it is possible to display the content displayed on display unit 530 of communication terminal device 500 on display unit 630 of video display device 600. The image size that can be displayed on display unit 630 is larger than the image size that can be displayed on display unit 530 and, therefore, it is possible for the user to comfortably view the content displayed on display unit 630.

Further, the sound volume value of content displayed on communication terminal device 500 can be taken over by the content displayed on video display device 600. Therefore, necessity of volume adjustment can be eliminated.

Here, it is assumed that the sound volume value is taken over. Pieces of information including channel pre-set information, sound volume mode, image display mode and the like may also be taken over.

After the process of step S124, control proceeds to step S125.

At S 125, a program transmitting process is performed. In the program transmitting process, control unit 610 transmits a program corresponding to its device ID to communication terminal device 500 based on program selection data D200 described in the following. To the transmitted program, the device ID of communication terminal device 500 ("11MA") as the destination device is added. Thereafter, the process of step S125 ends.

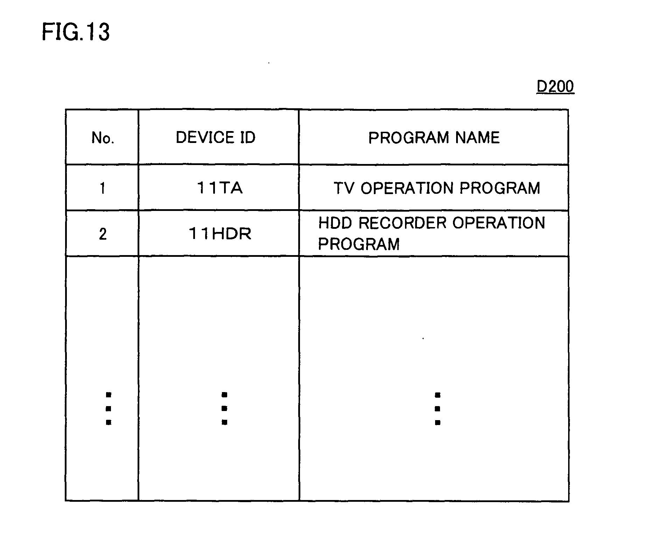

Fig. 13 shows an example of selection data D200. Referring to Fig. 13, program selection data D200 consists of a plurality of pieces of program selection information. "No." represents a number for managing each of the plurality of pieces of program selection information. "Device ID" represents an ID for specifying (identifying) the device. "Program Name" represents a name of a program. A plurality of programs corresponding to the plurality of program names displayed on program selection data D200 are stored beforehand in storage unit 620.

Therefore, if the device ID of itself is "11TA", in the program transmitting process, control unit 610 transmits a TV operation program to communication terminal device 500. When the TV operation program is executed on communication terminal device 500, the following operation image MG100A appears on display unit 530.

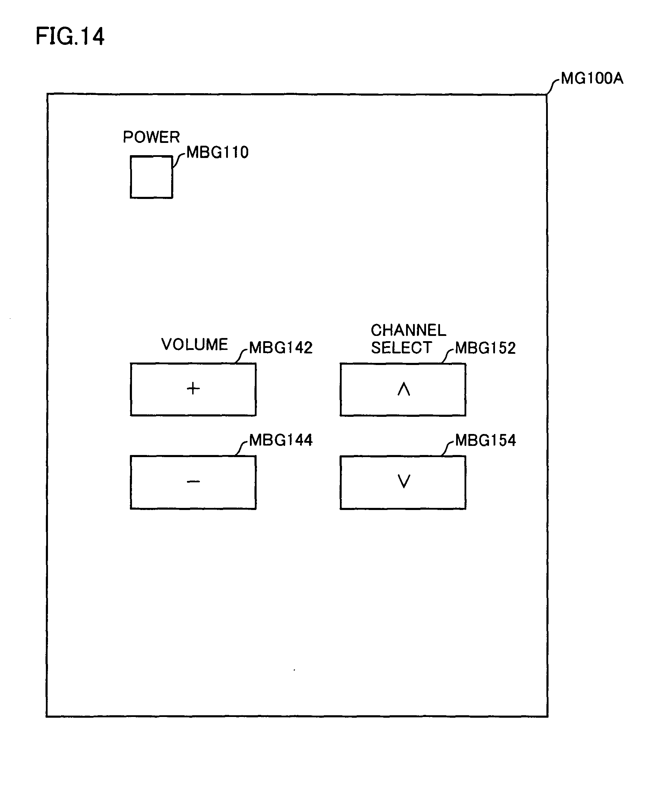

Fig. 14 shows an example of operation image MG100A. Referring to Fig. 14, operation image MG100A is different from remote controller image MG100 of Fig. 9 in that button images MBG120, MBG130, MBG170 and MBG180 are not arranged. Except for this point, the image is the same as remote controller image MG100 and, therefore, detailed description thereof will not be repeated.

The TV operation program includes data of button images MBG110, MBG142, MBG144, MBG152 and MBG154, information of a plurality of relative coordinate values for arranging button images MBG110, MBG142, MBG144, MBG152 and MBG154, respectively, in operation image MG100A, and information of button image names.

Button image names of button images MBG110, MBG142, MBG144, MBG152 and MBG154 are "power", "volume up", "volume down", "channel plus" and "channel minus", respectively.

Further, the TV operation program also includes remote control data for generating each of a plurality of remote control signals corresponding to button images MBG110, MBG142, MBG144, MBG152 and MBG154, respectively, and remote control data for generating a remote control signal corresponding to an external button. If any of button images MBG110, MBG142, MBG144, MBG152 and MBG154 is pressed by the interface operation M while the TV operation program is being executed on communication terminal device 500, control unit 510 performs a process for generating a remote control signal using the remote control data corresponding to the pressed button image and transmitting the generated remote control signal to video display device 600.

The plurality of remote control data corresponding to button images MBG110, MBG142, MBG144, MBG152 and MBG154 are data for generating the power remote control signal, the volume-up remote control signal, the volume-down remote control signal, the channel plus remote control signal and the channel minus remote control signal described above, respectively.

Again referring to Fig. 10, in video display device 600, after step S125, control proceeds to step S126.

At step S126, an operation guidance display process is performed. In the operation guidance display process, control unit 610 generates an operation guidance display image G100 as described in the following, displaying an operation guidance image in the content (for example, TV image) that is being displayed on display unit 630, utilizing VDP 632, and displays the operation guidance display image G100 on display unit 630. Then, the process of step S126 ends.

Here, it is assumed that on the TV image as the content displayed on display unit 630, the recording process described above is also being executed simultaneously. Therefore, it is possible to pause the TV image displayed on display unit 630 and to display a still image. When the TV image is paused, it is the case that TV images from the position where the TV image was paused (hereinafter also referred to as paused position) to the present have been recorded. Therefore, it is possible to play at fast speed the TV image from the paused position to the present time point, to view the TV images up to the present time.

Further, it is also possible to stop TV image and not to display the TV image on display unit 630. If a reproduction operation is performed while the TV image is stopped and the TV image is not displayed on display unit 630, reproduction display starts from that position of TV image at which it has been stopped. It is also possible by rewinding operation to set the display position of TV image displayed on display unit 630 at present to a position preceding by a prescribed period (for example, 15 sec.).

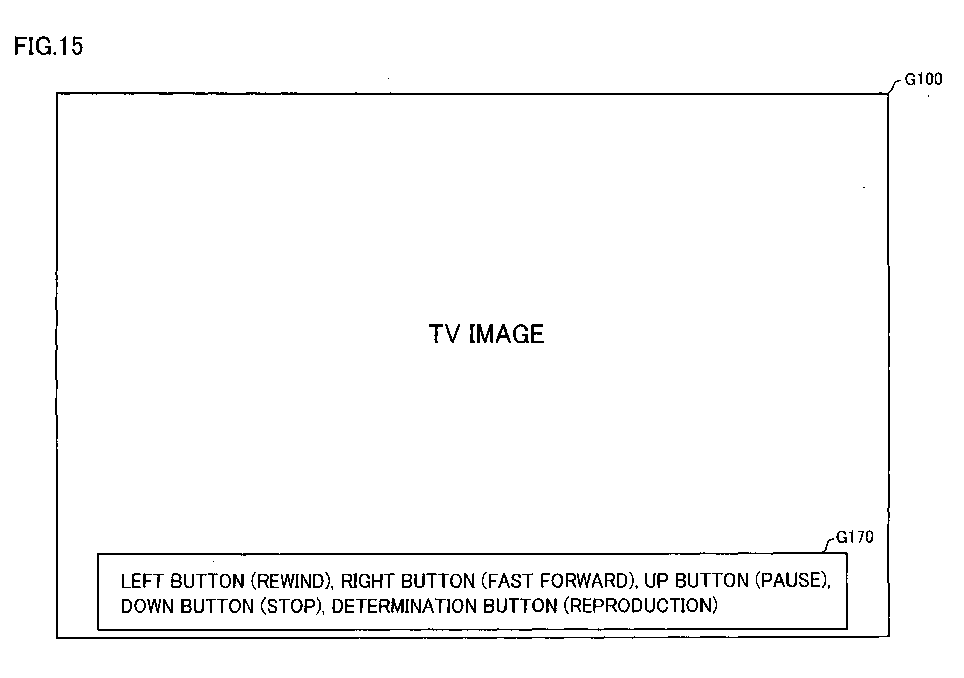

Fig. 15 shows an example of operation guidance display image G100. Referring to Fig. 15, operation guidance display image G100 has an operation guidance image G170 arranged in TV image. On operation guidance image G170, operation guidance information for operating video display device 600 by communication terminal device 500 is displayed.

The operation guidance information includes, by way of example, the information of "left button (rewind), right button (fast forward), up button (pause), down button (stop), determination button (reproduce)". The left button, right button, up button, down button and determination button are names of direction buttons 541C, 541D, 541A, 541B and 541E of communication terminal device 500, respectively.

Therefore, by the operation guidance information displayed on operation guidance image G170, it can be understood that by pressing direction button 541A as the up button, the content that is being displayed at present can be paused. Specifically, by making a reference to the operation guidance information displayed on operation guidance image G170, the user operating communication terminal device 500 can easily recognize which process is done by operating which button. By way of example, the operation guidance information displayed on operation guidance image G170 shows that rewind, fast-forward, pause, stop and reproduction processes can be done on the content that is being displayed.

Again referring to Fig. 10, in communication terminal device 500, after the process of step S113, control proceeds to step S114.

At step S114, control unit 510 determines whether a program with its device ID ("11MA") added has been received or not. If it is YES at step S114, control proceeds to step S115. If it is NO at step S114, the process of step S114 is performed again. Here, it is assumed that the TV operation program with its device ID ("11MA") added has been received, and control proceeds to step S115.

At step S115, an operation image display process is performed. In the operation image display process, control unit 510 executes the received program. Here, it is assumed that the received program is a TV operation program. Control unit 510 generates the operation image MG100A shown in Fig. 14 utilizing VDP 532 and displays the operation image MG100A on display unit 530, by executing the TV operation program.

Further, control unit 510 sets communication terminal device 500 to the remote control mode. Then, control unit 510 causes LED 576 to emit, for example, red light. The red light indicates that the communication terminal device 500 is in a state capable of operating video display device 600. Then, the process of step S115 ends.

Therefore, the user can easily recognize, from the color of light emitted from LED 576 whether or not the video display device 600 can be operated by communication terminal device 500.

After the process of step S115, control proceeds to step S118.

At step S118, control unit 510 executes an operation determining process M, which will be described later. The operation determining process M is performed independent from other processes. The process of step S118 ends, and the process performed by communication terminal device 500 for the content handling process ends.

In video display device 600, after the process of step S126, control proceeds to step S128.

At step S128, control unit 610 executes a control-signal-specific process T for performing a process corresponding to the remote control signal transmitted from communication terminal device 500. The control-signal-specific process T is performed independent from other processes. The process of step S128 ends, and the process performed by video display device 600 for the content handling process ends.

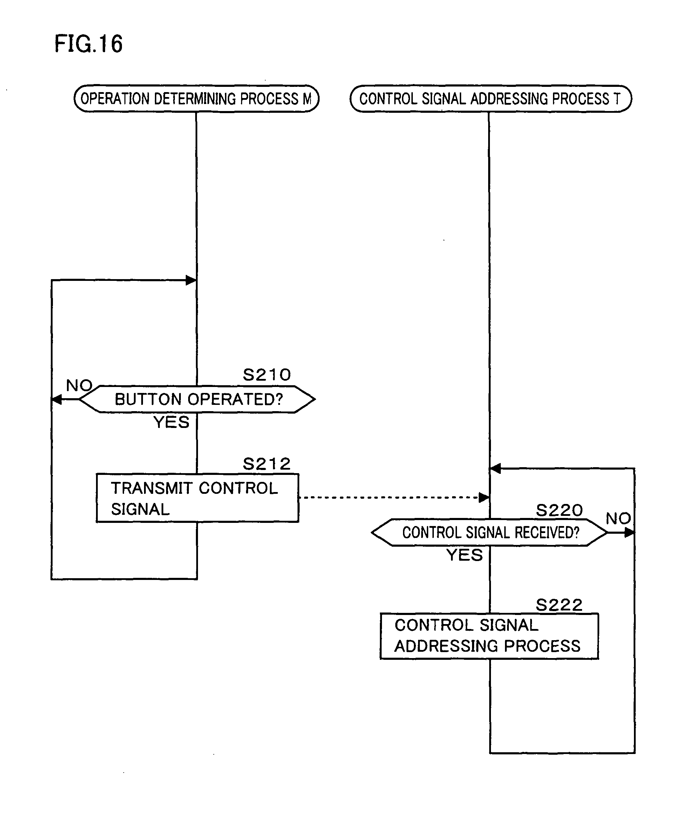

Fig. 16 is a flowchart of operation determining process M and control-signal-specific process T. Referring to Fig. 16, in operation determining process M performed by communication terminal device 500, first, the process of step S210 is executed.

At step S210, control unit 510 determines whether or not there is any button operation. The button operation refers to the interface operation M for pressing any of the plurality of button images arranged on operation image MG100A of Fig. 14 displayed on display unit 530, or pressing of any of the plurality of external buttons provided on the outside of communication terminal device 500. The plurality of external buttons include direction buttons 541A, 541B, 541C, 541D, determination button 541E, and function buttons 542A, 542B, 543A and 543B. If it is YES at step S210, control proceeds to step S212. If it is NO at step S210, the process of step S210 is again performed.

At step S212, control unit 510 transmits, utilizing communication unit 560, a remote control signal as the control signal corresponding to the pressed button image or external button, to video display device 600. If the button operation is pressing of direction button 541A, the remote control signal to be transmitted is the remote control signal including the information of "up button" as the name of direction button 541A. When the process of step S212 ends, the process of step S210 is performed again.

In the control-signal-specific process T performed by video display device 600, first, the process of step S220 is performed.

At step S220, control unit 610 determines whether or not the remote control signal as the control signal has been received. If it is YES at step S220, control proceeds to step S222. If it is NO at step S220, the process of step S220 is again performed. Here, as an example, it is assumed that remote control signal including the information of "up button" as the name of direction button 541A has been received.

At step S222, the control-signal-specific process is performed. In the control-signal-specific process, control unit 610 performs a process that corresponds to the received remote control signal. By way of example, if a remote control signal including the information of "up button" is received while operation guidance display image G100 of Fig. 15 is displayed on display unit 630, control unit 610 pauses TV image as the content and displays a still image on display unit 630, utilizing VDP532. When the process of step S222 ends, the process of step S220 is again performed.

Here, assume that the button operation determined at step S210 is, for example, the interface operation M of pressing button image MBG110 arranged on operation image MG100A. In that case, by the process of step S212, the power remote control signal as the control signal is transmitted to video display device 600. Then, receiving the power remote control signal, control unit 610 sets the video display device 600 to the standby mode.

Alternatively, assume that the button operation determined at step S210 is, for example, the interface operation M of pressing button image MBG142 arranged on operation image MG100A. In that case, by the process of step S212, the volume up remote control signal as the control signal is transmitted to video display device 600. Then, receiving the volume up remote control signal, control unit 610 performs a process of increasing the sound volume of voice corresponding to the TV image as the content displayed on display unit 630.

Through the process described above, it becomes possible for communication terminal device 500 to control other device, by executing a program transmitted from the other device. Here, the other device is, for example, video display device 600.

Further, in the present embodiment, if data communication becomes possible between communication terminal device 500 and video display device 600, a button image MBG210 as an icon is displayed on display unit 530, to allow operation of video display device 600.

Therefore, simply by performing a pressing operation as an instruction input to button image MBG210 as a displayed display element, it is possible for the user to set the video display device 600 to the normal mode even if the video display device 600 has been in the standby mode, and to operate the video display device 600. As a result, operation of other device becomes possible without requiring much time and labor.

### (Process When Video Display Device 600 Enters Standby Mode)

Next, the process when the power remote control signal as the control signal is transmitted by a button operation of communication terminal device 500 to video display device 600 and upon reception of the power remote control signal, the video display device 600 in the normal mode enters the standby mode (hereinafter referred to as the standby mode entrance process) will be described.

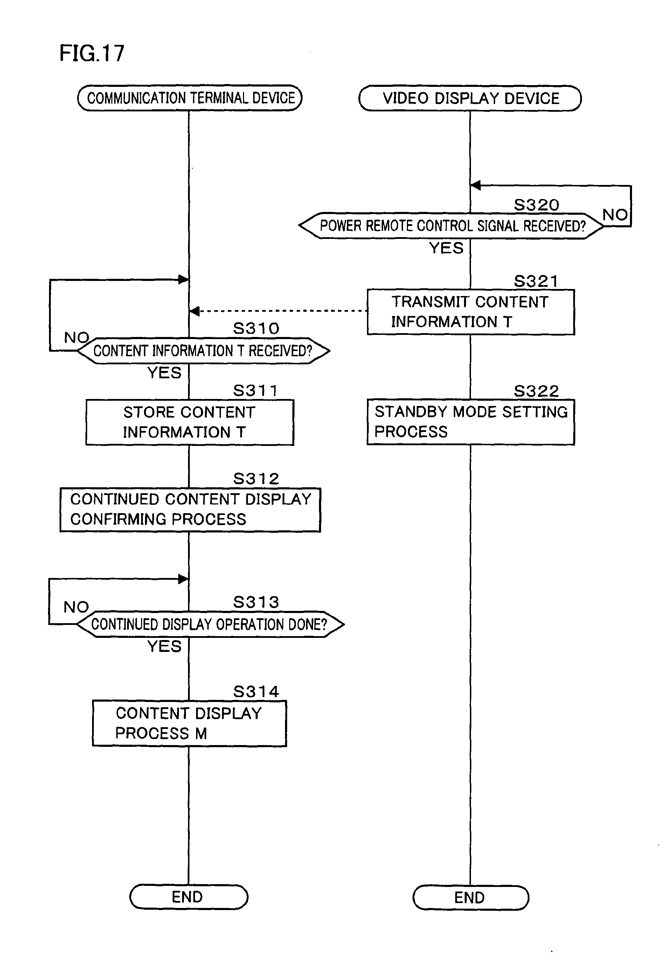

Fig. 17 is a flowchart of the standby mode entrance process. Fig. 17 shows the process performed in each of communication terminal device 500 and video display device 600. In the standby mode entrance process, the process performed by each of communication terminal device 500 and video display device 600 is performed independent from other processes.

Referring to Fig. 17, in video display device 600, first, the process of step S320 is performed.

At step S320, control unit 610 determines whether or not the power remote control signal as the control signal has been received from communication terminal device 500. If it is YES at step S320, control proceeds to step S321. If it is NO at step S320, the process of step S320 is again performed. Here, it is assumed that the power remote control signal has been received, and control proceeds to step S321.

At step S321, control unit 610 transmits content information T to the device that has transmitted the power remote control signal. Here, the device that has transmitted the power remote control signal is communication terminal device 500. Therefore, control unit 610 transmits the content information T to communication terminal device 500.

Content information T includes content specifying information T and content volume information T. Content specifying information T is for specifying the content displayed on display unit 630. Content volume information is information indicating the sound volume value of the voice of content displayed on display unit 630. It is assumed that the sound volume value of voice of the content displayed on display unit 630 is represented by a numerical value of "0" to "20". If the sound volume value is "0", it represents that the sound volume of voice of the content displayed on display unit 630 is zero.

Here, it is assumed that TV image of channel 3 based on a broadcast signal is displayed on display unit 630. Here, the content displayed on display unit 630 is the TV image of channel 3. Therefore, content specifying information T is information representing channel 3. Further, assume that the sound volume value of voice of the TV image displayed on display unit 630 is, for example, "10". Therefore, content volume information T is information representing sound volume value "10".

If a content image corresponding to a content received from service server 800A is displayed on display unit 630, identification information specifying the received content serves as the content specifying information T. Further, the sound volume value of voice of the content image serves as the content volume information T.

The transmitted content information T further includes device ID of the transmission destination device, and device ID of itself. If the device ID of itself is "11TA" and the device ID of transmission destination is "11MA", the transmitted content information T includes the device ID "11TA" of itself and device ID "11MA" of the transmission destination. Then, the process of step S321 ends.

In communication terminal device 500, first, the process of step S310 is performed.

At step S310, control unit 510 determines whether or not the content information T including the device ID of itself has been received. If it is YES at step S310, control proceeds to step S311. If it is NO at step S310, the process of step S310 is again performed. Here, it is assumed that content information T including the device ID (" 11MA") of itself and the device ID ("11TA") of video display device 600 has been received, and control proceeds to step S311.

At step S311, control unit 510 stores the received content information T in storage unit 520, in correspondence with the device ID ("11TA") of the device (video display device 600) that transmitted the content information T, included in the content information T. Thereafter, control proceeds to step S312.

At step S312, a continued content display confirming process is performed. In the continued content display confirming process, control unit 510 generates a continued display confirming image MG300 as described in the following utilizing VDP 532, and displays the continued display confirming image MG300 on display unit 530. The continued display confirming image MG300 is for confirming whether or not the content that has been displayed on display unit 630 of video display device 600 is to be continuously displayed on display unit 630. Then the process of step S312 ends.

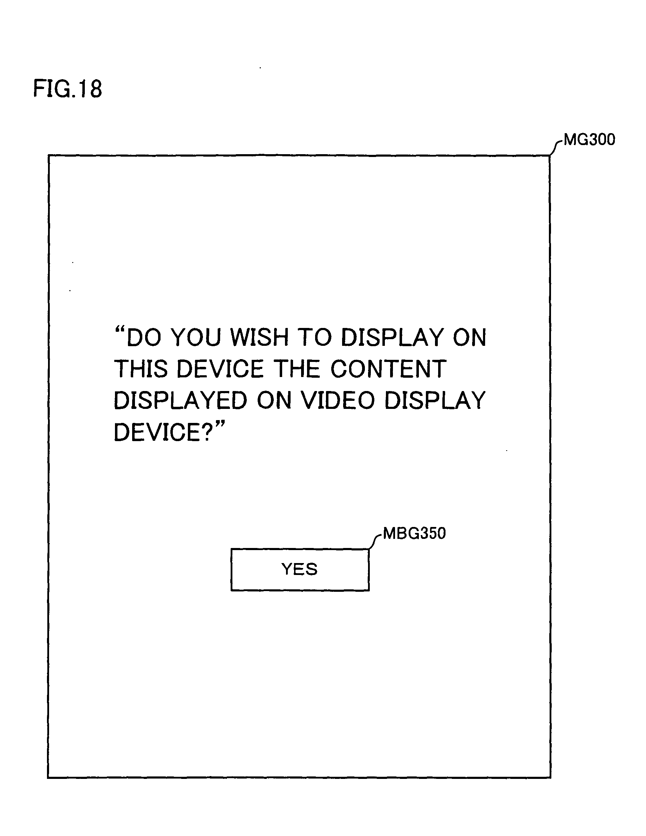

Fig. 18 shows an example of continued display confirming image MG300. Referring to Fig. 18, continued display confirming image MG300 has a message displayed for confirming whether or not the content that has been displayed on video display device 600 is to be displayed on this device. The message is, for example, "Do you wish to display on this device the content displayed on video display device?"

A button image MG350 is further arranged on continued display confirming image MG3 00.

Button image MG350 is for performing, when pressed by the interface operation M, a process of displaying, on this device, the content that has been displayed on video display device 600.

Again referring to Fig. 17, after the end of step S312, control proceeds to step S313.

At step S313, control unit 510 determines whether or not a continued display operation has been made. The continued display operation is the interface operation M of pressing button image MG350. If it is YES at step S313, control proceeds to step S314. If it is NO at step S313, the process of step S313 is again performed. Here, it is assumed that the continued display operation has been made, and control proceeds to step S314.

At step S314, a content display process M is performed. In the content display process M, control unit 510 displays the content based on the content specifying information T included in the received content information T, utilizing VDP 532. Further, control unit 510 outputs the voice of content displayed on display unit 530, with the volume based on the sound volume value indicated by the content volume information T included in the received content information T, from audio output unit 572.

Here, the content based on content specifying information T displayed on display unit 530 is the TV image of channel 3, based on the broadcast signal.

Further, the sound volume value indicated by content volume information T is "10". Therefore, the volume of voice of the content displayed on display unit 530 is based on the sound volume value "10" indicated by content volume information T.

The sound volume value of voice of content displayed on display unit 530 may not be the same as the sound volume value "10" indicated by content volume information T. Here, the volume output from audio output unit 572 of communication terminal device 500 is set by control unit 510 based on the sound value indicated by the content volume information T, such that the volume of voice output from audio output unit 572 of communication terminal device 500 is L (larger than 0 and smaller than 1 (for example, 0.5)) times the volume of voice output from the audio output unit 670 of video display device 600.

If the content specifying information T is for identifying the content received from service server 800A, control unit 510 receives the content specified by the content specifying information T from service server 800A, and displays the received content on display unit 630. In this case, control unit 510 outputs the voice of content displayed on display unit 530 from audio output unit 572, with the volume based on the sound volume value indicated by content volume information T. Then, the process of step S314 ends, and the process of communication terminal device 500 in the standby mode entrance process ends.

Thereafter, when a process is performed to display the device recognizing image MG200 of Fig. 12 on display unit 530 of communication terminal device 500, it becomes possible to turn ON the image display power of video display device 600 by a simple operation and to control the video display device 600 by communication terminal device 500.

In video display device 600, after the process of step S321, control proceeds to step S322.

At step S322, a standby mode setting process is performed. In the standby mode setting process, control unit 610 turns off the image display power, to set the video display device 600 to the standby mode. Then, no image is displayed on display unit 630. Then, the process by the video display device 600 in the standby mode entrance process ends.

By the processes described above, it is possible to display the content that has been displayed on display unit 630 of video display device 600 on the display unit 530 of communication terminal device 500. Therefore, it is possible to easily view while on the road, for example, continuation of a content one viewed on video display device 600.

Further, the sound volume value of the content displayed on video display device 600 can be turned over to the content displayed on communication terminal device 500. Therefore, the task of adjusting sound volume value is unnecessary.

### (When Connection Signals Are Received From Devices of a Plurality of Types)

In the process of step S110 shown in Fig. 10, as described above, communication terminal device 500 may receive connection signals from devices of a plurality of types, rather than receiving the connection signal only from video display device 600. By way of example, if the connection signal is received from each of video display device 600 and the HDD recorder, the following device recognizing image MG200A is displayed on display unit 530, by the device recognizing process at step S111 of Fig. 10. It is assumed that the HDD recorder transmitted the connection signal including the device ID "11HDR" of itself to communication terminal device, as does video display device 600.

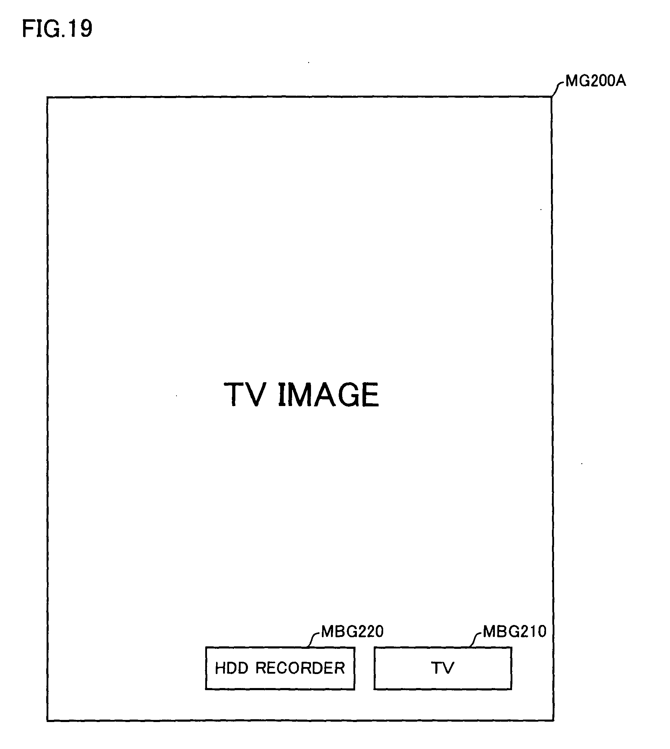

Fig. 19 shows an example of device recognizing image MG200A. Referring to Fig. 19, device recognizing image MG200A differs from device recognizing image MG200 shown in Fig. 12 in that a button image MBG220 as an icon is additionally arranged on the TV image. Except for this point it is the same as device recognizing image MG200. Therefore, detailed description thereof will not be repeated.

Button image MBG220 displays the device name as recognized by control unit 510. Further, button image MBG220 is a button image for transmitting a control start signal as the control signal to the device having the device ID corresponding to the device name, when pressed by the interface operation M. The control start signal is for setting the device, which is in the standby mode, to the normal mode. Here the device name displayed on button image MBG220 is "HDD recorder" and, therefore, from the device specifying data D100 shown in Fig. 11, the corresponding device ID is determined to be "11HDR". Thus, the control start signal is transmitted to the HDD recorder when button image MGB220 is pressed.

In the HDD recorder, processes similar to those following step S121 of Fig. 10 described above are performed, whereby communication terminal device 500 receives an HDD recorder operating program and performs a process similar to that of step S115 described above. Then, communication terminal device 500 is set to a state capable of operating the HDD recorder.

The process described above attains the effect of enabling one device to readily operate a device desired by the user among devices of different types.

### (Functional Block Diagram)

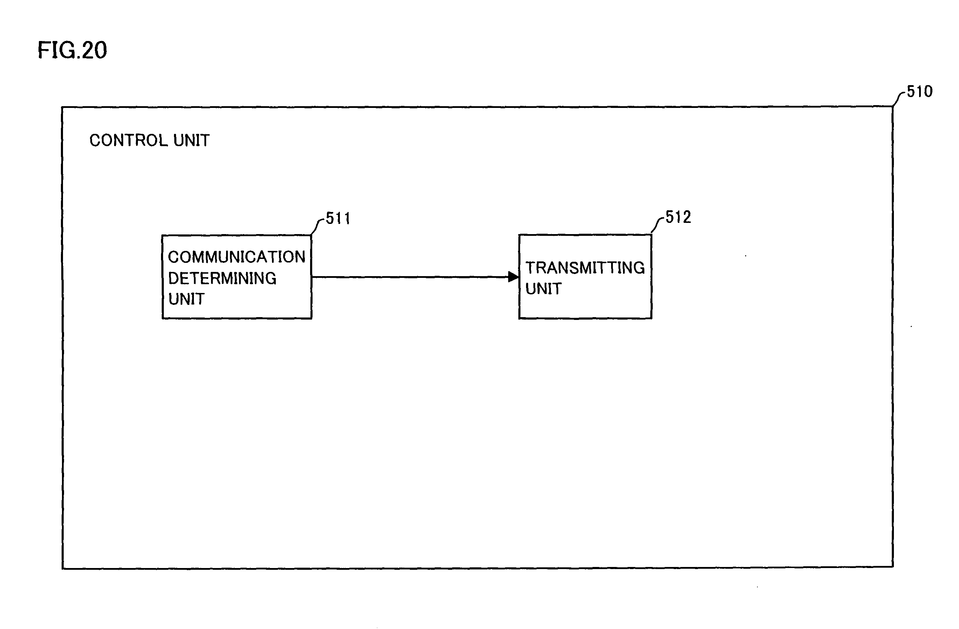

Fig. 20 is a functional block diagram of control unit 510 in accordance with the present embodiment. Referring to Fig. 20, control unit 510 includes a communication determining unit 511 and a transmitting unit 512. Communication determining unit 511 performs the process of step S110 of Fig. 10 described above. Specifically, communication determining unit 511 determines whether or not data communication with video display device 600 is possible. The result of determination by communication determining unit 511 is transmitted to transmitting unit 512.

Receiving an instruction input to a display element displayed on display unit 530, transmitting unit 512 transmits a control signal for operating video display device 600 to video display device 600.

All or part of communication determining unit 511 and transmitting unit 512 included in control unit 510 may be implemented by hardware.

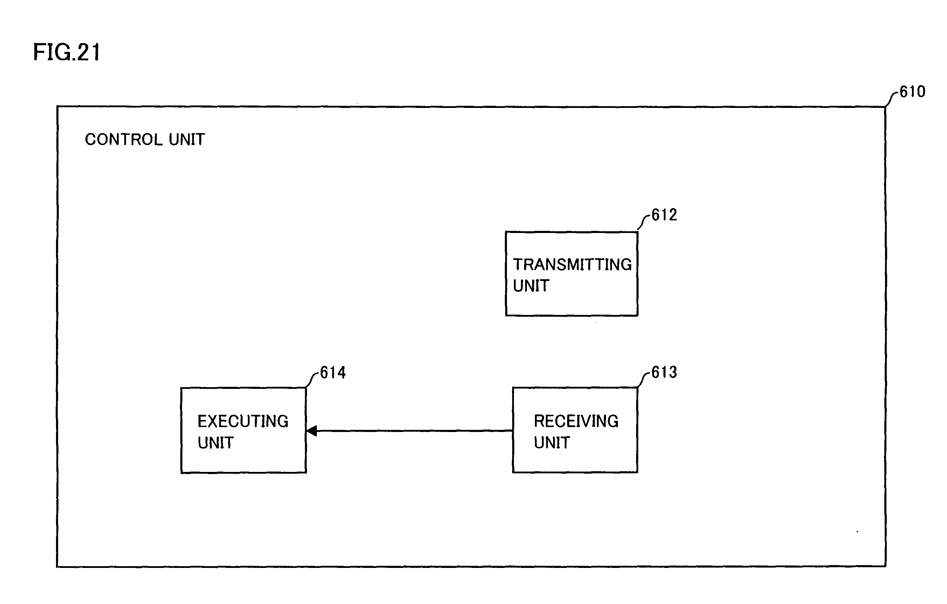

Fig. 21 is a functional block diagram of control unit 610 in accordance with the present embodiment. Referring to Fig. 21, control unit 610 includes a transmitting unit 612, a receiving unit 613, and an executing unit 614.

Transmitting unit 612 transmits a connection signal for enabling data communication with video display device 600, that is, the device in which it is provided, to communication terminal device 500. Receiving unit 613 receives a control signal for operating video display device 600, transmitted from communication terminal device 500. Executing unit 614 executes a process corresponding to the received control signal.

All or part of transmitting unit 612, receiving unit 613 and executing unit 614 included in control unit 610 may be implemented by hardware.

### <Second Embodiment>

In the present embodiment, a process for displaying separate menus on each of the communication terminal device 500 and video display device 600 will be described.

The network system in accordance with the present embodiment is similar to the network system 1000 in accordance with the first embodiment, and, therefore, detailed description thereof will not be repeated. Configuration of each of communication terminal device 500, video display device 600 and service server 800A is the same as the configuration described in the first embodiment and, therefore, detailed description thereof will not be repeated.

### (Menu Display)

Next, a process of displaying a menu, by each of communication terminal device 500 and video display device 600 (hereinafter also referred to as menu display process) will be described. It is assumed that on display unit 530 of communication terminal device 500, the remote controller image MG100 shown in Fig. 9 is displayed. Here, it is assumed that communication terminal device 500 is set in the remote control mode.

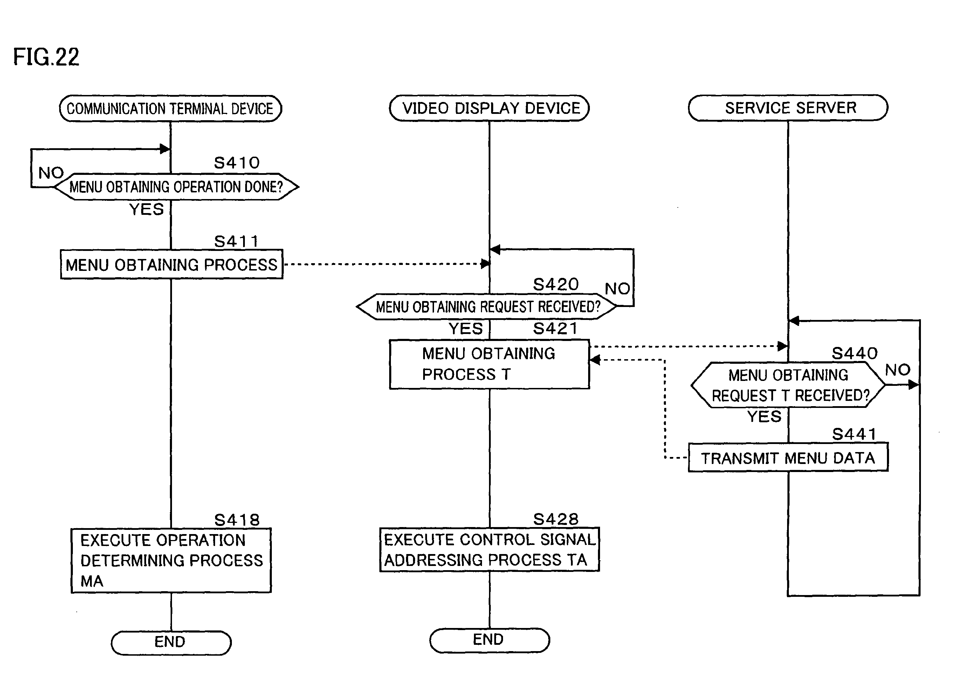

Fig. 22 is a flowchart of the menu display process. Fig. 22 shows processes performed by each of communication terminal device 500, video display device 600 and service server 800A. Referring to Fig. 22, in communication terminal device 500, first, the process of step S410 is performed.

At step S410, control unit 510 determines whether or not there is a menu obtaining operation. The menu obtaining operation refers to an operation of displaying a menu listing contents that can be obtained from service server 800A, on display unit 530. Specifically, the menu obtaining operation is the interface operation M of pressing the button image MBG130 of Fig. 9. If it is YES at S410, control proceeds to step S411. If it is NO at step S410, the process of step S410 is again performed.

At step S411, a menu obtaining process is performed. In the menu obtaining process, first, control unit 510 transmits a menu obtaining remote control signal as a menu obtaining request, to video display device 600 using communication unit 560. The menu obtaining remote control signal is a remote control signal causing video display device 600 to obtain the menu listing the contents that can be obtained from service server 800A. Then, the process of step S411 ends.

In video display device 600, first, the process of step S420 is performed.

At step S420, first, control unit 610 determines whether or not the menu obtaining remote control signal as the menu obtaining request has been received. If it is YES at step S420, control proceeds to step S421. If it is NO at step S420, the process of step S420 is again performed.

At step S421, a menu obtaining process T is performed. In menu obtaining process T, first, control unit 610 transmits a menu obtaining request T for obtaining the menu listing the contents that can be obtained from service server 800A, to service server 800A using communication unit 662.

In service server 800A, first, the process of step S440 is performed.

At step S440, control unit 810 determines whether or not the menu obtaining request T has been received. If it is YES at step S440, control proceeds to step S441. If it is NO at step S440, the process of step S440 is again performed.

At step S441, control unit 810 transmits menu data D300 as will be described in the following, which is data of a menu listing genre of distributable contents, to the device that has transmitted the menu obtaining request T. Then, the process of step S441 ends, and the process of S440 is again performed.

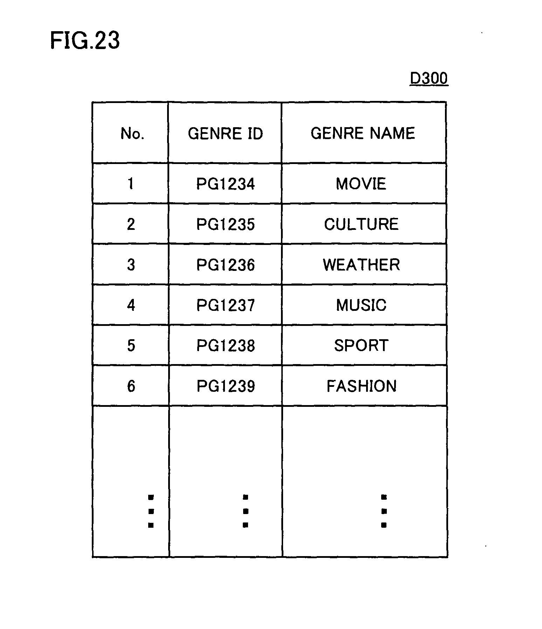

Fig. 23 shows an example of menu data D300. Referring to Fig. 23, menu data D300 consists of a plurality of piece of genre information. "No." represents a number for managing each of a plurality of pieces of genre information, and corresponds to remote controller number. "Genre ID" is an ID for specifying the genre of the content. "Genre name" represents the genre name of the corresponding content.

Again referring to Fig. 22, in video display device 600, in the menu obtaining process T of step S421, control unit 610 receives the menu data D300. Receiving the menu data D300, control unit 610 stores menu data D300 in storage unit 620. Then, based on menu data D300, control unit 610 generates a menu image G200 as will be described in the following utilizing VDP 632, and displays the generated menu image G200 on display unit 630. Then, the process of step S421 ends.

In the following, the image generated based on the menu data D300 will be also referred to as upper layer menu image. Therefore, menu image G200 is the upper layer menu image. Menu image G200 is for selecting any of the plurality of genres as a piece of information.

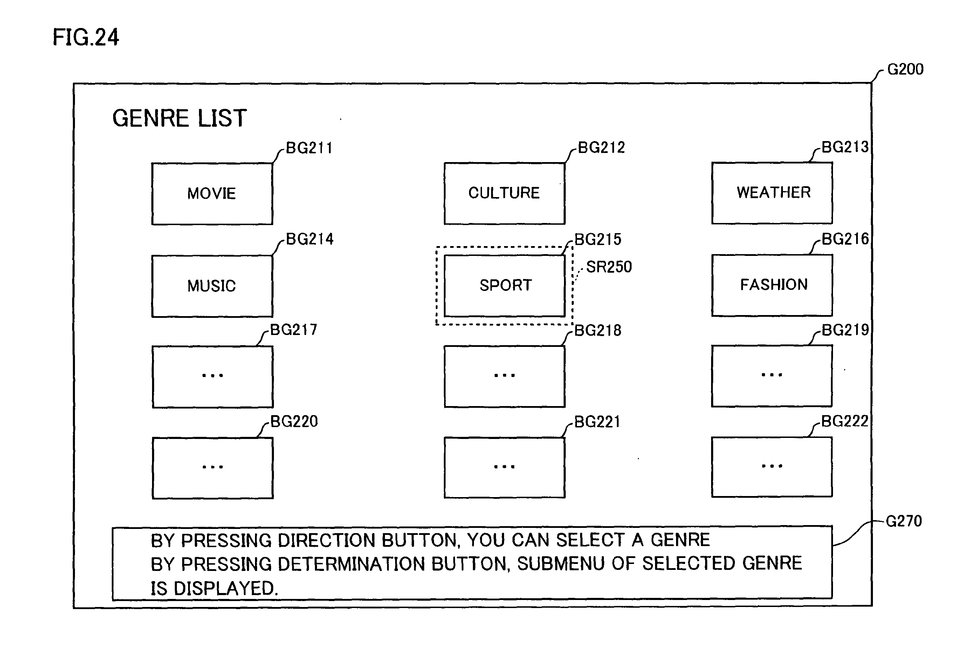

Fig. 24 shows an example of menu image G200. Referring to Fig. 24, button images BG211, BG212, BG213, BG214, BG215, BG216, BG217, BG218, BG219, BG220, BF221 and BG222 are arranged on menu image G200. On each of the button images BG211, BG212, BG213, BG214, BG215, BG216, BG217, BG218, BG219, BG220, BF221 and BG222, the content genre is displayed.

Each of the button images BG211, BG212, BG213, BG214, BG215, BG216, BG217, BG218, BG219, BG220, BF221 and BG222 is a button image for obtaining, from service server 800A, a sub-menu of the corresponding genre.

Further, on menu image G200, a selection frame SR250 is arranged, by way of example, to surround button image BG215. The button image that is surrounded by selection frame SR250 is the button image in the selected state. It is noted that in the initial state, the position of arrangement of selection frame SR250 is not limited to the position surrounding button image BG215, and it may be a position surrounding a different button image.

Further, an operation guidance image G270 is arranged on menu image G200. On operation guidance image G270, operation guidance information for operating video display device 600 by communication terminal device 500 is displayed. By way of example, the operation guidance information is message information "By pressing direction button, you can select genre. By pressing determination button, sub-menu of selected genre will be displayed"

Here, the direction button includes direction buttons 541A, 541B, 541C and 541D of communication terminal device 500, and the determination button is the determination button 541E of communication terminal device 500. The character sequences of "direction button" and "determination button" included in the operation guidance information may be images such as icons. For instance, direction buttons 541A, 541B, 541C and 541D may be represented by arrow icons indicating up, down, left and right directions, respectively.

Again referring to Fig. 22, after the process of step S421, control proceeds to step S428.

At step S428, control unit 610 executes a control-signal-specific process TA, which will be described later, for performing a process that corresponds to the remote control signal transmitted from communication terminal device 500. The control-signal-specific process TA is a process performed independent from other processes. Then the process of step S428 ends, and the process of video display device 600 in the menu display process ends.

In communication terminal device 500, after the process of step S411, control proceeds to step S418.

At step S418, control unit 510 executes an operation determining process MA. The operation determining process MA is a process performed independent from other processes. Then, the process of step S418 ends, and the process of communication terminal device 500 in the menu display process ends.

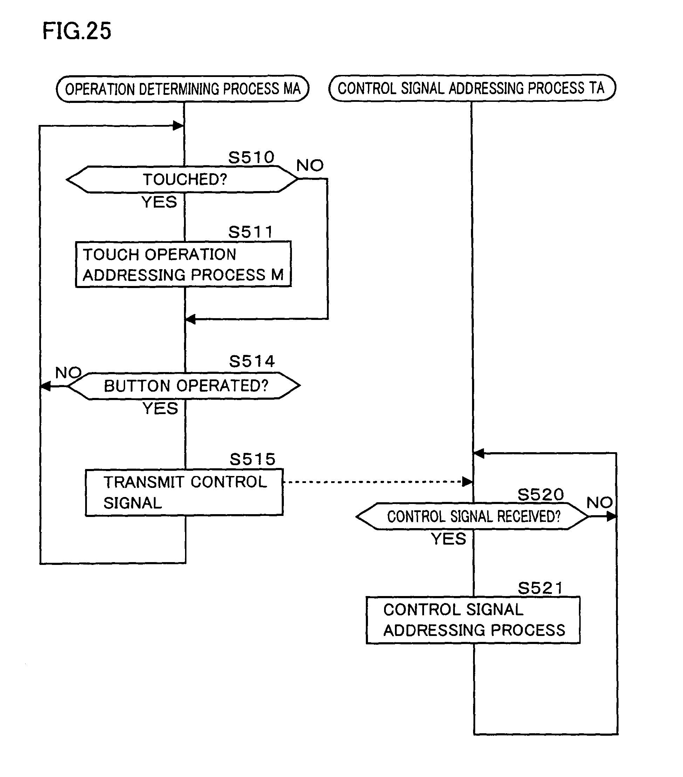

Fig. 25 is a flowchart of the operation determining process MA and the control-signal-specific process TA. Referring to Fig. 25, in the operation determining process MA performed by communication terminal device 500, first, the process of step S510 is performed.

At step S510, control unit 510 determines whether or not there is a touch operation on display unit 530. The touch operation is an interface operation M for pressing a hyper-link character sequence, a button image or the like in the image displayed on display unit 530. If it is YES at step S510, control proceeds to step S511. If it is NO at step S510, control proceeds to step S514.

At step S511, a touch-operation-specific process M is performed. In the touch-operation-specific process, a process based on the touch operation is performed. Detailed processes in touch-operation-specific process M will be described later. When the touch-operation-specific process ends, control proceeds to step S514.

At step S514, control unit 510 determines whether or not there is a button operation. The button operation refers to pressing of any of the plurality of external buttons provided on the outside of communication terminal device 500. The plurality of external buttons include direction buttons 541A, 541B, 541C and 541D, determination button 541E, and function buttons 542A, 542B, 543A and 543B. If it is YES at step S514, control proceeds to step S515. If it is NO at step S514, the process of step S510 is performed again.

At step S515, control unit 510 transmits a remote control signal as a control signal corresponding to the pressed external button to video display device 600, utilizing communication unit 560. If the button operation is, for example, pressing of direction button 541B, the transmitted remote control signal will be the remote control signal that includes the information of "down button" as the name of direction button 541B. When the process of step S515 ends, the process of step S510 is again performed.

In the control-signal-specific process TA performed by video display device 600, first, the process of step S520 is performed.

At step S520, control unit 610 determines whether or not a remote control signal as a control signal has been received. If it is YES at step S520, control proceeds to step S521. If it is NO at step S520, the process of step S520 is again performed. Here, as an example, it is assumed that a remote control signal including the information of "down button" as the name of direction button 541B, has been received, and control proceeds to step S521.

At step S521, the control-signal-specific process is performed. In the control-signal-specific process, control unit 610 performs a process that corresponds to the received remote control signal. By way of example, if the menu image G200 of Fig. 24 is displayed on display unit 630 and selection frame SR250 is arranged at the position surrounding button image BG215, control unit 610 displays an image in which selection frame SR250 is moved to a position surrounding button image BG218, on display unit 630. Specifically, button image BG218 is set to the selected state. When the control-signal-specific process ends, the process of step S520 is again performed.

Therefore, by the operation determining process MA and control-signal-specific process TA, the button image of the selected state changes by the operation of direction buttons 541A, 541B, 541C and 541D of communication terminal device 500. Specifically, when direction buttons 541A, 541B, 541C or 541D of communication terminal device 500 is operated, the corresponding remote control signal is transmitted to video display device 600 by the process of step S515 described above. Control unit 610 of video display device 600 generates an image with the selection frame SR250 moved up, down, to the left or to the right, based on the received remote control signal, utilizing VDP 632. Here, the remote control signal received by control unit 610 is the control signal for operating video display device 600.

### (Sub-menu Display)

Next, a process when the sub-menu obtaining operation is made in communication terminal device 500 while the menu image G200 of Fig. 24 is displayed on display unit 630 of video display device 600 will be described.

The sub-menu obtaining operation refers to the operation of pressing determination button 541E of communication terminal device 500, while a button image among button images BG211, BG212, BG213, BG214, BG215, BG216, BG217, BG218, BG219, BG220, BF221 and BG222 displayed on menu image G200 of Fig. 24 is being in the selected state.

Here, it is assumed as an example that the sub-menu obtaining operation is done while button image BG215 is in the selected state. Here, determination is YES at step S514 of operation determining process MA of Fig. 25, and the process of step S515 is performed.

At step S515, the process described above is performed and therefore, detailed description thereof will not be repeated. By this process, control unit 510 transmits the remote control signal including the information of "determination button" as the name of determination button 541E (hereinafter also referred to as a determination remote control signal) to video display device 600.

In video display device 600, at step S520 of control-signal-specific process TA, determination of YES is made and the process of step S521 is performed.

At step S521, the control-signal-specific process is performed. Here, control unit 610 receives the determination remote control signal while the button image BG215 is in the selected state. Specifically, the determination signal transmitted from communication terminal device 500 to the video display device 600 is a selection signal for selecting the button image BG21 indicating the genre information of sports. Specifically, the determination remote control signal is the selection signal for selecting the genre information.

Here, in the control-signal-specific process, control unit 610 performs the sub-menu obtaining process T for obtaining the sub-menu of the genre corresponding to the button image in the selected state, from service server 800A. It is assumed that the button image in the selected state is button image BG215.

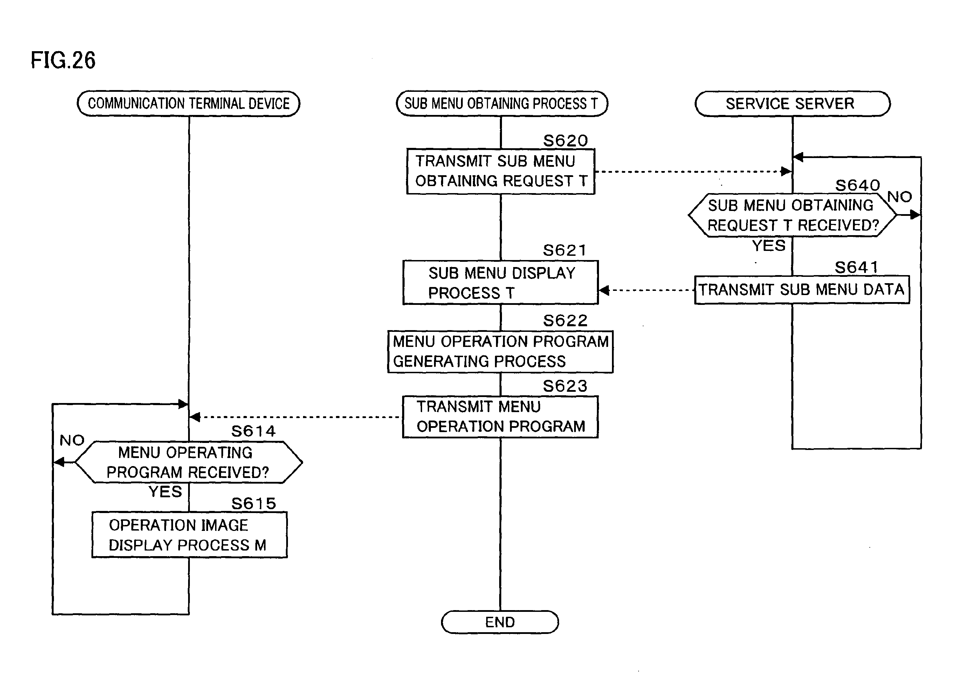

Fig. 26 is a flowchart representing the process performed by communication terminal device 500, the sub-menu obtaining process T and the process performed by service server 800A. The processes performed by communication terminal device 500 and service server 800A shown in Fig. 26 are performed independent from other processes.

Referring to Fig. 26, in the sub-menu obtaining process performed by video display device 600, first, the process of step S620 is performed.

At step S620, control unit 610 transmits the sub-menu obtaining request T to service server 800A. Sub-menu obtaining request T is a request for obtaining, from service server 800A, a sub-menu of the genre corresponding to the button image in the selected state. The sub-menu obtaining request includes a genre ID for specifying the genre corresponding to the button image in the selected state. Here, the button image in the selected state is button image BG215, and the corresponding genre is "sports". Therefore, it can be seen from menu data D300 of Fig. 23, that the genre ID included in the sub-menu obtaining request T is "PG1238." Then, the process of step S620 ends.

In the process performed by service server 800A, first, the process of step S640 is performed.

At step S640, control unit 810 determines whether or not the sub-menu obtaining request has been received. If it is YES at step S640, the process of step S641 is performed. If it is NO at step S640, the process of step S640 is again performed. Here, it is assumed that the sub-menu obtaining request including the genre ID "PG1238" has been received, and control proceeds to step S641.

At step S641, control unit 810 transmits sub-menu data corresponding to the genre ID included in the sub-menu obtaining request T to the device that has transmitted the sub-menu obtaining request T. The sub-menu data is data of a menu listing contents that can be distributed by service server 800A. The genre ID included in the sub-menu obtaining request T is "PG1238", and the corresponding genre is "sport". Therefore, the transmitted sub-menu data is sub-menu data D300SB as will be described in the following. Then, the process of step S641 ends, and the process of step S640 is again performed.

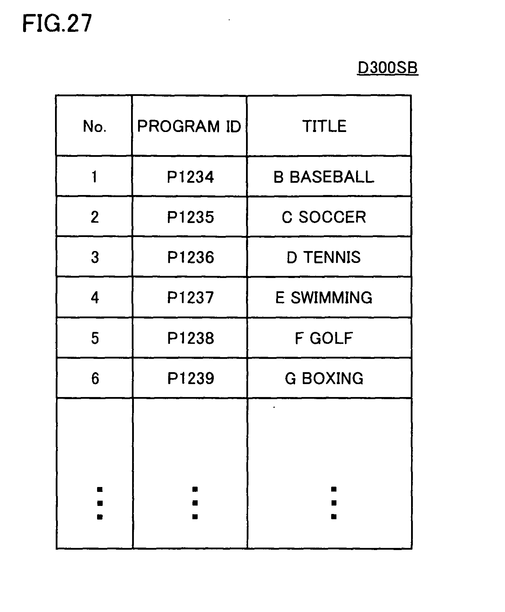

Fig. 27 shows an example of sub-menu data D300SB. Referring to Fig. 27, sub-menu data D300SB consists of a plurality of pieces of contents information. "No." represents a number for managing each of the plurality of pieces of contents information. "Program ID" is an ID for specifying the content. "Title" represents the title of the corresponding content.

Again referring to Fig. 26, in video display device 600, after the process of step S620, control proceeds to step S621.

At step S621, sub-menu display process T is performed. In sub-menu display process T, control unit 610 receives the sub-menu data. Here, it is assumed that the received sub-menu data is sub-menu data D300SB. Receiving sub-menu data D300SB, control unit 610 stores the sub-menu data D300SB in storage unit 620. Then, control unit 610 generates a sub-menu image G300 as will be described in the following utilizing VDP 632, based on the sub-menu data D300SB, and displays the generated sub-menu image G300 on display unit 630. Specifically, on display unit 630, sub-menu image G300 is displayed in place of sub-menu image G200. Then, the process of step S621 ends.

In the following the image generated based on sub-menu data D300SB is also referred to as a lower layer menu image. Therefore, the sub-menu image G300 is the lower layer menu image. The lower layer menu image is an image allowing selection of any of the plurality of pieces of information of different types (for example, contents titles) corresponding to the selected information among the plurality of pieces of information (for example, genre), displayed on the upper layer menu image.

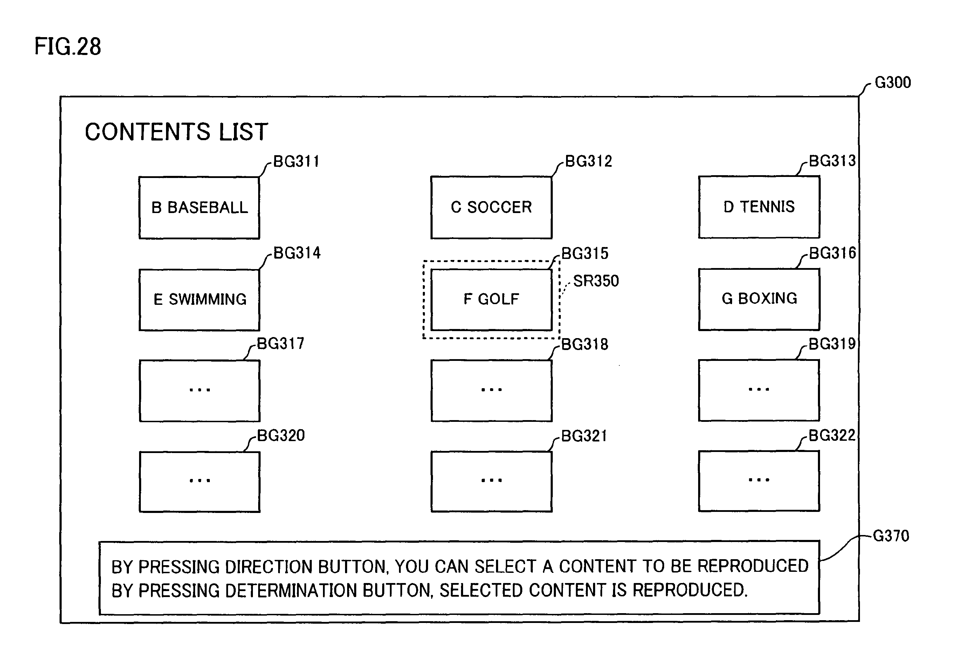

Fig. 28 shows an example of sub-menu image G300. Referring to Fig. 28, on sub-menu image G300, button images BG311, BG312, BG313, BG314, BG315, BG316, BG317, BG318, BG319, BG320, BG321 and BG322 are arranged. On each of the button images BG311, BG312, BG313, BG314, BG315, BG316, BG317, BG318, BG319, BG320, BG321 and BG322, a title of a content based on the plurality of pieces of contents information of sub-menu data D300SB of Fig. 27 is displayed.

Each of the button images BG311, BG312, BG313, BG314, BG315, BG316, BG317, BG318, BG319, BG320, BG321 and BG322 is a button image for obtaining the corresponding content from service server 800A.

Further, on sub-menu image G300, a selection frame SR350 is arranged, for example, to surround button image BG315. The button image surrounded by selection frame SR350 is the button image in the selected state. It is noted that in the initial state, the position of arrangement of selection frame SR350 is not limited to the position surrounding button image BG315, and it may be a position surrounding a different button image.

Further, on sub-menu image G300, an operation guidance image G370 is arranged. On operation guidance image G370, operation guidance information for operating video display device 600 by communication terminal device 500 is displayed. By way of example, the operation guidance information is message information "By pressing direction button, you can select a content to be reproduced. By pressing determination button, the selected content will be reproduced."

Here, the direction button includes direction buttons 541A, 541B, 541C and 541D of communication terminal device 500, and the determination button is the determination button 541E of communication terminal device 500. The character sequences of "direction button" and "determination button" included in the operation guidance information may be images such as icons. For instance, direction buttons 541A, 541B, 541C and 541D may be represented by arrow icons indicating up, down, left and right directions, respectively.

Sub-menu image G300 may be an image on which an electronic program table generated based on EPG data is displayed. In that case, each of button images BG311, BG312, BG313, BG314, BG315, BG316, BG317, BG318, BG319, BG320, BG321 and BG322 serves as a button image for obtaining the moving image of a program as the content. In that case, button images BG311 to BF322 will be the button images for obtaining, for example, broadcast programs of channels 1 to 12.

If sub-menu image G300 is displayed on display unit 630, the button image in the selected state is changed by the operation of direction buttons 541A, 541B, 541C and 541D of communication terminal device 500, of the operation determining process MA and control-signal-specific process TA of Fig. 25 described above. Specifically, when the direction button 541A, 541B, 541C or 541D of communication terminal device 500 is operated, the corresponding remote control signal is transmitted to video display device by the process of step S515 described above. Control unit 610 of video display device 600 generates an image with the selection frame S350 moved up, down, to the left or to the right based on the received remote control signal, utilizing VDP 632. Here, the remote control signal received by control unit 610 is the control signal for operating video display device 600.

Again referring to Fig. 26, after the process of step S621, control proceeds to step S622.

At step S622, a menu operation program generating process is performed. In the menu operation program generating process, control unit 610 generates a menu operation program, using the plurality of pieces of genre information of menu data D300 of Fig. 23, which is stored in storage unit 630. The menu operation program is a program for displaying an operation image MG400 as will be described in the following, when executed by communication terminal device 500. Then, the process of step S622 ends.

As described above, the image generated based on the menu data D300 is also referred to as the upper layer menu image and, therefore, the operation image MG400 is an upper layer menu image.

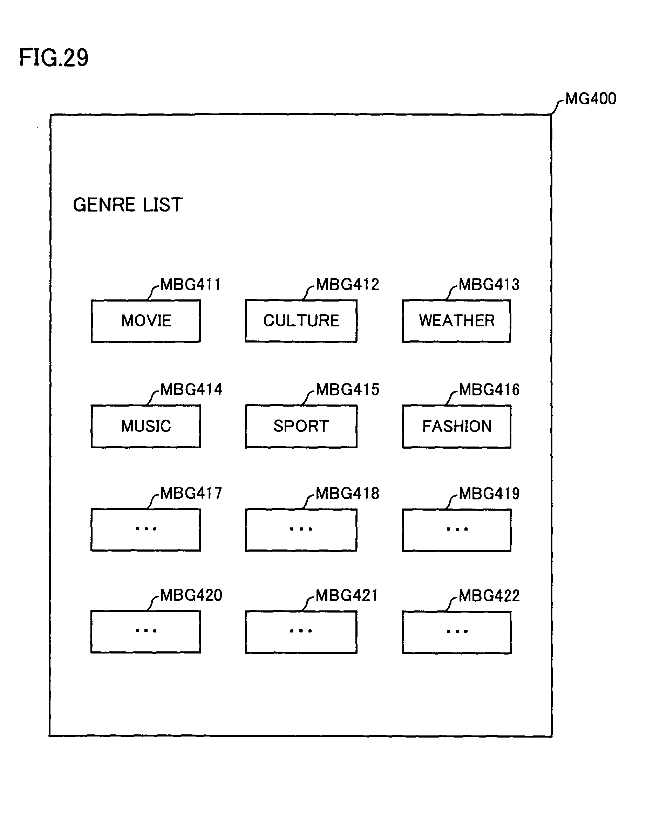

Fig. 29 shows an example of operation image MG400. Referring to Fig. 29, on operation image MG400, button images MBG411, MBG412, MBG413, MBG414, MBG415, MBG416, MBG417, MBG418, MBG419, MBG420, MBG421 and MBG422 are arranged. On each of the button images MBG411, MBG412, MBG413, MBG414, MG415, MBG416, MBG417, MBG418, MBG419, MBG420, MBG421 and MBG422, genre of content based on the plurality of pieces of genre information of menu data D300 is displayed.

Each of the button images MBG411, MBG412, MBG413, MBG414, MBG415, MBG416, MBG417, MBG418, MBG419, MBG420, MBG421 and MBG422 is a button image for obtaining a sub-menu of the corresponding genre, from service server 800A.

Menu operation program includes data of button images MBG411, MBG412, MBG413, MBG414, MBG415, MBG416, MBG417, MBG418, MBG419, MBG420, MBG421 and MBG422, information of relative coordinates for arranging the button images MBG411, MBG412, MBG413, MBG414, MG415, MBG416, MBG417, MBG418, MBG419, MBG420, MBG421 and MBG422 in operation image MG400, and the like.

Further, menu operation program also includes remote control data for generating each of the plurality of remote control signals corresponding to the button images MBG411, MBG412, MBG413, MBG414, MBG415, MBG416, MBG417, MBG418, MBG419, MBG420, MBG421 and MBG422.

If any of the button images MBG411, MBG412, MBG413, MBG414, MBG415, MBG416, MBG417, MBG418, MBG419, MBG420, MBG421 and MBG422 is pressed by the interface operation M while the menu operation program is executed by communication terminal device 500, a process is performed in which control unit 510 generates a remote control signal using the remote control data corresponding to the pressed button image and the generated remote control signal is transmitted to video display device 600.

The plurality of remote control data corresponding to the button images MBG411, MBG412, MBG413, MBG414, MBG415, MBG416, MBG417, MBG418, MBG419, MBG420, MBG421 and MBG422 are data for generating remote control signals including the genre IDs of the plurality of pieces of genre information of menu data D300. For example, a remote control signal corresponding to button image MBG414 is generated by the remote control data including the genre ID "PG1237" indicated by the genre information No. "4", of menu data D300. Here, the generated remote control signal will be a remote control signal including the genre ID "PG1237".

Again referring to Fig. 26, after the process of step S622, control proceeds to step S623.

At step S623, control unit 610 transmits the generated menu operation program to communication terminal device 500. Then, the process of step S623 ends, and the sub-menu obtaining process also ends.

In communication terminal device 500, first, the process of step S614 is performed.

At step S614, control unit 510 determines whether or not the menu operation program has been received. If it is YES at step S614, control proceeds to step S615. If it is NO at step S614, the process of step S614 is again performed. Here, it is assumed that the menu operation program has been received, and control proceeds to step S615.

At step S615, an operation image display process M is performed. In operation image display process M, control unit 510 executes the received program. Here, it is assumed that the received program is the menu operation program. By executing the menu operation program, control unit 510 generates an operation image MG400 of Fig. 29 utilizing VDP 532, and displays an operation image MG400 on display unit 530. Then, the process of step S615 ends, and the process of step S614 is again performed.

By the process described above, on the display unit 630 of video display device 600, a sub menu image G300 as the lower layer menu image that corresponds to the menu image G200 as the upper layer menu image comes to be displayed. Further, on display unit 530 of communication terminal device 500, operation image MG400 as the upper layer menu image that corresponds to the sub menu image G300 as the lower layer menu image is displayed.

### (Menu Switching Display)

Next, a process when sub menu image G300 as the lower layer menu image is displayed on display unit 630 of video display device 600 and operation image MG400 as the upper layer menu image is displayed on display unit 530 of communication terminal device 500, will be described.

Here, the process when a sub menu obtaining operation M has been done on communication terminal device 500 will be described.

Sub menu obtaining operation M refers to an operation of touching any of the button images MBG411, MBG412, MBG413, MBG414, MBG415, MBG416, MBG417, MBG418, MBG419, MBG420, MBG421 and MBG422 displayed on operation image MG400 as the upper layer menu image. Here, by way of example, it is assumed that the button MBG411 has been touched. Then, at step S510 of operation determining process MA shown in Fig. 25, it is determined YES, and the process of step S511 is performed.

At step S511, touch-operation-specific process M as described above is performed. Here, in the touch-operation-specific process M, the sub menu obtaining process M is performed by video display device 600 to obtain the sub menu of a genre corresponding to the touched button image from service server 800A.

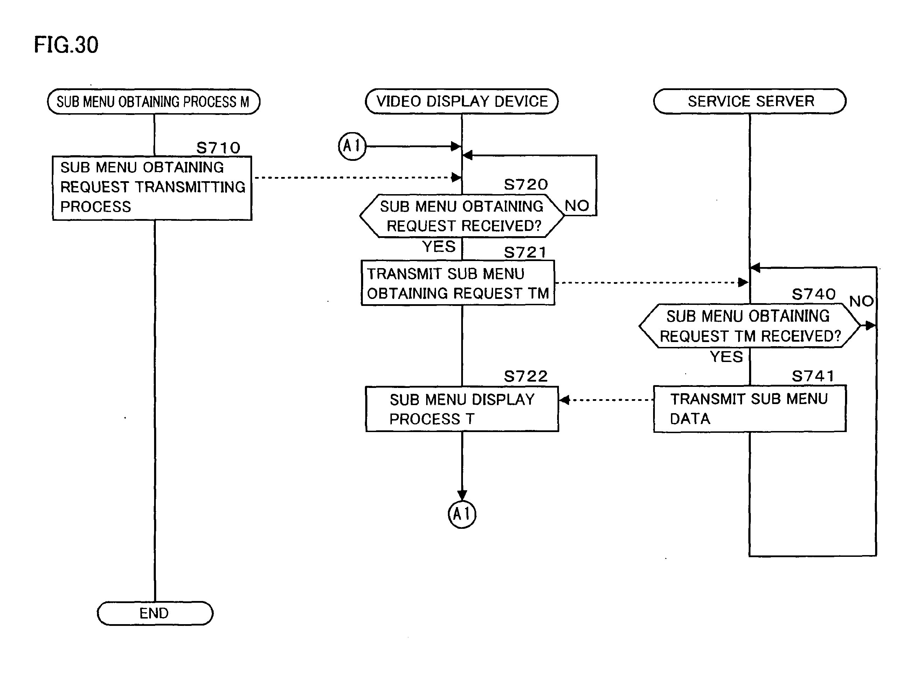

Fig. 30 is a flowchart representing the sub menu obtaining process M, the process performed by video display device 600 and the process performed by service server 800A. The processes performed by video display device 600 and service server 800A shown in Fig. 30 are performed independent from other processes.

Referring to Fig. 30, in the sub menu obtaining process M performed by communication terminal device 500, first, the process of step S710 is performed.

At step S710, a sub menu obtaining request transmitting process is performed. In the sub menu obtaining request transmitting process, first, control unit 510 generates a sub menu obtaining remote control signal, using remote control data that corresponds to the touched button image. The sub menu obtaining remote control signal is a remote control signal allowing video display device 600 to obtain the sub menu corresponding to the touched button image from service server 800A.

Here, if the touched button image is button image MGB411, the corresponding remote control data is the data including genre ID "PG1234" indicating the genre information No."1", of menu data D300 shown in Fig. 23. Here, the generated sub menu obtaining remote control signal is a remote control signal including genre ID "PG1234".

Then, control unit 510 transmits the generated sub menu obtaining remote control signal as the sub menu obtaining request, to video display device 600.

In video display device 600, first, the process of step S720 is performed.

At step S720, control unit 610 determines whether or not the sub menu obtaining remote control signal as the sub menu obtaining request has been received. If it is YES at step S720, control proceeds to step S721. If it is NO at step S720, the process of step S720 is again performed. Here, it is assumed that the sub menu obtaining remote control signal including genre ID "1234" has been received, and control proceeds to step S721.

At step S721, control unit 610 transmits a sub menu obtaining request TM to service server 800A. Sub menu obtaining request TM is a request for obtaining a sub menu of the genre selected by communication terminal device 500, from service server 800A. Sub menu obtaining request TM includes the genre ID "PG1234" for specifying the genre, which is included in the sub menu obtaining remote control signal. Here, the genre selected by communication terminal device 500 is, from the menu data D300 of Fig. 23, "movie." Then, the process of step S721 ends.

In service server 800A, first, the process of step S740 is performed.

At step S740, whether or not the sub menu obtaining request TM has been received is determined. If it is YES at step S740, the process of step S741 is performed. If it is NO at step S740, the process of step S740 is again performed. Here, it is assumed that the sub menu obtaining request TM including genre ID "PG1234" has been received, and control proceeds to step S741.

At step S741, control unit 810 transmits a sub menu data that corresponds to the genre ID included in the sub menu obtaining request TM, to the device that has transmitted the sub menu obtaining request TM. The sub menu data is data of a menu listing contents that can be distributed by service server 800A. The genre ID included in sub menu obtaining request TM is "PG1234", and the corresponding genre is "movie." Therefore, the transmitted sub menu data is the sub menu data D304SB as will be described in the following. Then the process of step S741 ends, and the process of step S740 is again performed.

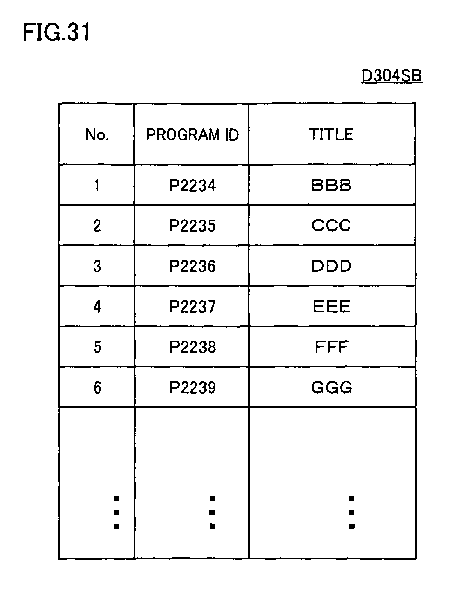

Fig. 31 shows sub menu data D304SB as an example. Referring to Fig. 31, sub menu data D304SB consists of a plurality of pieces of contents information as does the sub menu data D300SB shown in Fig. 27 and, therefore, detailed description thereof will not be repeated. In the plurality of pieces of contents information shown in sub menu data D304SB, the plurality of titles are titles related to the movies. Further, "Program ID" represents an ID for specifying the corresponding movie content.

Again referring to Fig. 30, in video display device 600, after the process of step S721, control proceeds to step S722.

At step S722, a sub menu display process T is performed. In sub menu display process T, control unit 610 receives the sub menu data. Here, it is assumed that the received sub menu data is sub menu data D304SB. Receiving the sub menu data D304SB, control unit 610 stores sub menu data D304SB in storage unit 620.

Then, control unit 610 generates a sub menu image G304 as will be described in the following, utilizing VDP 632 based on sub menu data D304SB, and displays the generated sub menu image G304 on display unit 630. Here, the sub menu image G304 is a lower layer menu image. Then, the process of step S722 ends, and the process of step S720 is again performed.

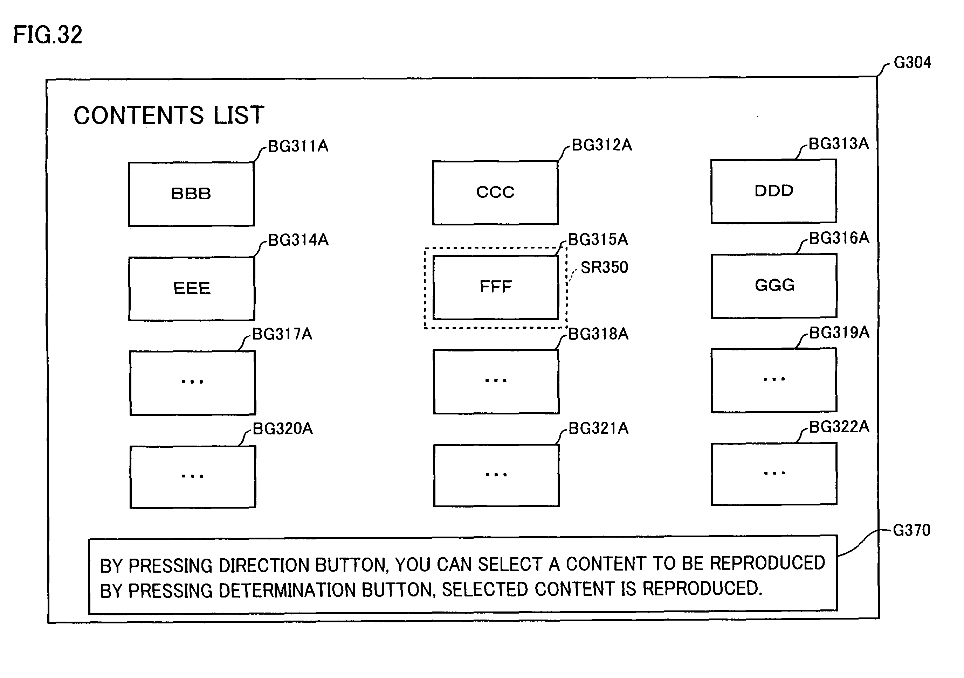

Fig. 32 shows an example of sub menu image G304. Referring to Fig. 32, sub menu image G304 is different from sub menu image G300 of Fig 28 in that in place of button images BG311, BG312, BG313, BG314, BG315, BG316, BG317, BG318, BG319, BG320, BG321 and BG322, button images BG311A, BG312A, BG313A, BG314A, BG315A, BG316A, BG317A, BG318A, BG319A, BG320A, BG321A and BG322A are arranged. Except for this point, it is the same as sub menu image G300 and, therefore, detailed description thereof will not be repeated.

Further, button images BG311A, BG312A, BG313A, BG314A, BG315A, BG316A, BG317A, BG318A, BG319A, BG320A, BG321A and BG322A are different from button images BG311, BG312, BG313, BG314, BG315, BG316, BG317, BG318, BG319, BG320, BG321 and BG322 in that movie-related titles are displayed. Except for this point, button images are the same as button images BG311, BG312, BG313, BG314, BG315, BG316, BG317, BG318, BG319, BG320, BG321 and BG322 and, therefore, detailed description thereof will not be repeated.

By the process described above, it becomes possible to switch the lower layer menu image displayed on display unit 630 of video display device 600 to a lower layer menu image of another genre, while maintaining the display of operation image MG400 as the upper layer menu image displayed on display unit 530 of communication terminal device 500.

### (Contents Reproduction)

Next, a process for reproducing a content, when sub menu image G300 as the lower layer menu image is displayed on display unit 630 of video display device 600 and operation image MG400 as the upper layer menu image is displayed on display unit 530 of communication terminal device 500, will be described.

Here, a process when the content obtaining operation M has been done in communication terminal device 500 will be described.

The content obtaining operation M refers to an operation allowing video display device 600 to receive a content from service server 800A. Specifically, content obtaining operation M is an operation of pressing, when any of button images BG311, BG312, BG313, BG314, BG315, BG316, BG317, BG318, BG319, BG320, BG321 and BG322 displayed on sub menu image G300 of Fig 28 is selected, the determination button 541E on communication terminal device 500.

Here, as an example, assume that sub content obtaining operation M is made while button image BG315 is in the selected state. Here, it is determined YES at step S514 of operation determining process MA shown in Fig. 25, and the process of step S515 is performed.

At step S515, the process described above is performed and, therefore, detailed description will not be repeated. By this process, control unit 510 transmits a determination remote control signal including the information of "determination button" as the name of determination button 541E, to video display device 600.

In video display device 600, it is determined YES at step S520 of control-signal-specific process TA, and the process of step S521 is performed.

At step S521, the control-signal-specific process is performed. Here, it is the case that control unit 610 receives the determination remote control signal while button image BG315 is in the selected state. Here, in the control-signal-specific process, control unit 610 performs the content obtaining process T for obtaining the content corresponding to the selected button image from service server 800A. Here, it is assumed that the button image in the selected state is button image BG315.

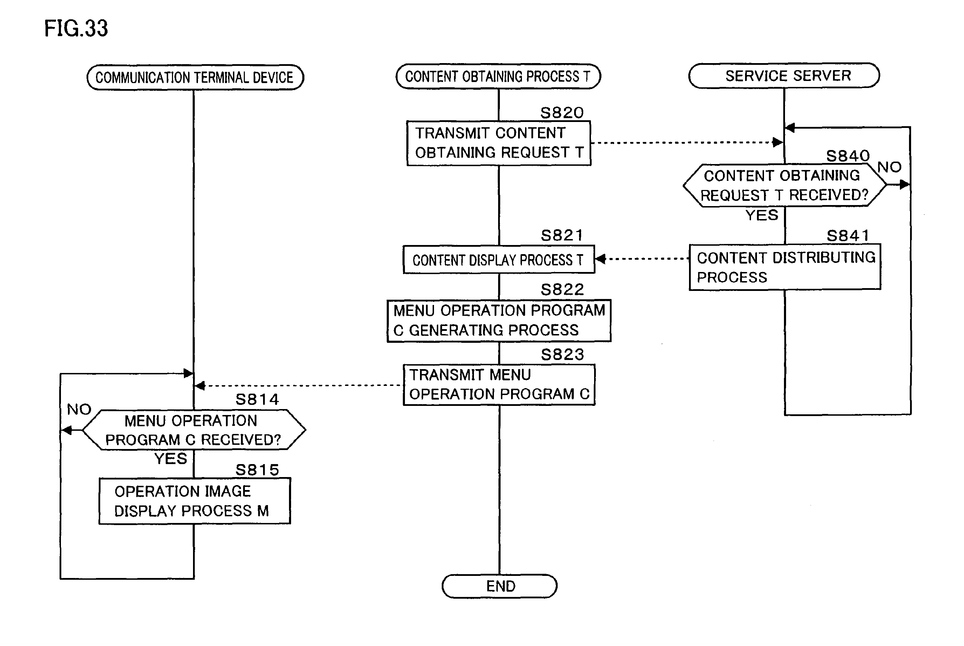

Fig. 33 is a flowchart representing the process performed by communication terminal device 500, the content obtaining process T and the process performed by service server 800A. The processes performed by communication terminal device 500 and service server 800A are performed independent from other processes.

Referring to Fig. 33, in the content obtaining process T performed by video display device 600, first, the process of step S820 is performed.

At step S820, control unit 610 transmits the content obtaining request T to service server 800A. The content obtaining request T is a request for obtaining the content that corresponds to the button image in the selected state from service server 800A.

The content obtaining request T includes a program ID for specifying the content that corresponds to the button image in the selected state. Here, the button image in the selected state is button image BG315 and the title of content is "F golf. Therefore, from sub menu data D300SB shown in Fig. 27, the program ID included in content obtaining request T is "P1238". Then, the process of step S820 ends. In the following, the content requested by content obtaining request T to service server 800A is also referred to as the requested content.

In the process performed by service server 800A, first, the process of step S840 is performed.

At step S840, control unit 810 determines whether or not the content obtaining request T has been received. If it is YES at step S840, the process of step S841 is performed. If it is NO at step S840, the process of step S840 is again performed. Here, it is assumed that the content obtaining request T including program ID "P1238" has been received, and control proceeds to step S841.

At step S841, a content distributing process is performed. In the content distributing process, control unit 810 starts a process of distributing, in streaming manner, the requested content to the video display device 600 that has transmitted the content obtaining request T. Here, the requested content is the content specified by the program ID "P1238". The requested content may be distributed to video display device 600 as the broadcast radio wave.

Here, it is assumed that the requested content is moving image data compressed in MPEG2-TS (Transport Stream) format. The manner of compressing moving image data is not limited to MPEG2-TS format, and the data may be compressed in other format. Here, other format may include MPEG2 and H.264. Further, it is assumed that the requested content is moving image data having the title of "F golf". The requested content may be distributed not in the streaming manner but in a manner that allows the video display device to download the requested content.

When distribution of requested content ends, the process of step S841 ends, and the process of step S840 is again performed.

In video display device 600, after the process of step S820, control proceeds to step S821.

At step S821, control unit 610 executes the content display process T. Content display process T is performed independent from other processes. Then, the process of step S821 ends.

In the content display process T, a streaming reproduction display process is performed, in which control unit 610 reproduces (decodes) the requested content while receiving the requested content from service server 800A utilizing VDP 632, and displays an image based on the requested content (hereinafter also referred to as a content image) on display unit 630. Here, a content display image G400 as will be described in the following is displayed on display unit 630.

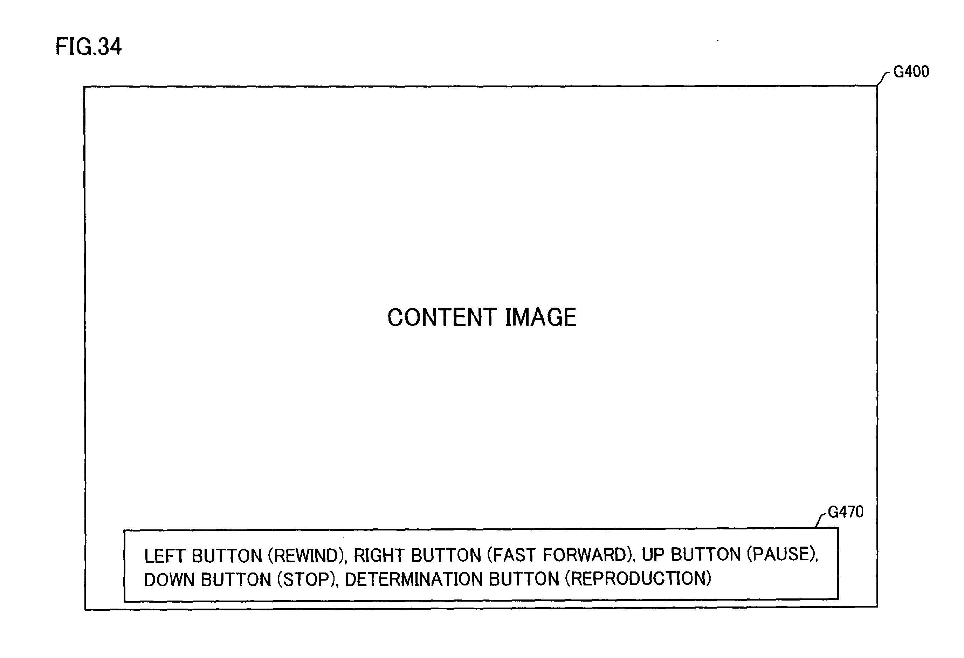

Fig. 34 shows an example of content display image G400. Referring to Fig. 34, on content display image G400, a content image based on the requested content is displayed. Further, on content display image G400, an operation guidance image G470 is arranged. On operation guidance image G470, operation guidance information for operating video display device 600 by communication terminal device 500 is displayed.

The operation guidance information displayed on operation guidance image G470 is similar to the operation guidance information displayed on operation guidance image G170 arranged on operation guidance display image G100 of Fig. 15 and, therefore, detailed description thereof will not be repeated. Specifically, the operation guidance information displayed on operation guidance image G470 indicates that rewind, fast-forward, pause, stop and reproduction processes can be done on the content that is being reproduced on display unit 630.

If direction button 541D, for example, is pressed on communication terminal device 500 while content display image G400 is displayed on display unit 630, the content that is being reproduced is fast-forwarded by the processes of steps S515 and S521 shown in Fig. 25 described above.

Again referring to Fig. 33, after the process of step S821, control proceeds to step S822.

At step S822, a menu operation program C generating process is performed. In the menu operation program C generating process, control unit 610 generates a menu operation program C using a plurality of pieces of contents information of sub menu data D300SB shown in Fig. 27, which is stored in storage unit 630. Menu operation program C is a program for displaying, when executed by communication terminal device 500, an operation image MG500 as will be described in the following, on display unit 530. Then the process of step S822 ends.

As described above, the image generated based on sub menu data D300SB is also referred to as a lower layer menu image and, therefore, operation image MG500 is a lower layer menu image.

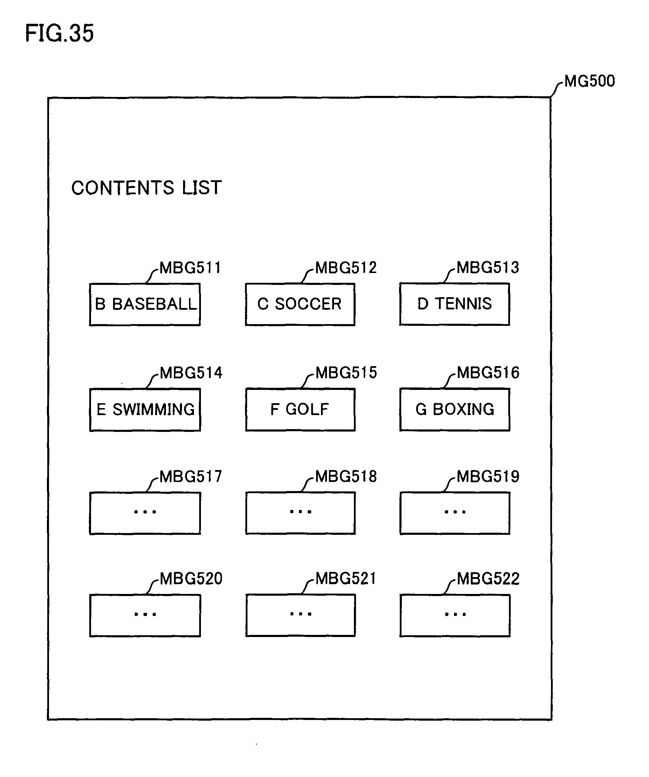

Fig. 35 shows an example of operation image MG500. Referring to Fig. 35, on operation image MG500, button images MBG511, MBG512, MBG513, MBG514, MG515, MBG516, MBG517, MBG518, MG519, MBG520, MBG521 and MBG522 are arranged. On each of button images MBG511, MBG512, MBG513, MG514, MG515, MBG516, MG517, MBG518, MBG519, MBG520, MBG521 and MBG522, a title of a content based on the plurality of pieces of contents information of sub menu data D300SB of Fig. 27 is displayed.

Each of the button images MBG511, MBG512, MBG513, MBG514, MBG515, MBG516, MBG517, MBG518, MBG519, MBG520, MBG521 and MBG522 is a button image for obtaining the corresponding content from service server 800A.

Menu operation program C includes data of button images MBG511, MBG512, MBG513, MBG514, MBG515, MBG516, MBG517, MBG518, MBG519, MBG520, MBG521 and MBG522, and information of a plurality of relative coordinate values for arranging button images MBG511, MBG512, MBG513, MBG514, MBG515, MBG516, MBG517, MBG518, MBG519, MBG520, MBG521 and MBG522 on the operation image MG500.

Further, menu operation program C also includes remote control data for generating each of a plurality of remote control signals corresponding to button images MBG511, MBG512, MG513, MG514, MBG515, MBG516, MBG517, MBG518, MBG519, MBG520, MBG521 and MBG522, respectively.

If any of the button images MBG511, MBG512, MBG513, MBG514, MG515, MG516, MBG517, MBG518, MBG519, MBG520, MBG521 and MBG522 is pressed by the interface operation M while the menu operation program C is being executed by communication terminal device 500, a process is performed in which control unit 510 generates a remote control signal using remote control data corresponding to the pressed button image and transmits the generated remote control signal to video display device 600.

Remote control data that correspond to button images MBG511, MBG512, MBG513, MBG514, MBG515, MBG516, MBG517, MBG518, MBG519, MBG520, MBG521 and MBG522 are data for generating remote control signals including the program IDs of a plurality of pieces of content information in sub menu data D300SB shown in Fig. 27, respectively. By way of example, a remote control signal corresponding to button image MBG514 is generated by the remote control data including a program ID "P1237" indicated by the content information No. "4", of sub menu data D300SB. Here, the generated remote control signal will be a remote control signal that includes program ID "P1237".

Again referring to Fig. 33, after the process of step S822, control proceeds to step S823.

At step S823, control unit 610 transmits the generated menu operation program C to communication terminal device 500. Then, the process of step S813 ends, and the content obtaining process ends.

In communication terminal device 500, first, the process of step S814 is performed.

At step S814, control unit 510 determines whether or not the menu operation program C has been received. At step S814, control unit 510 determines whether or not the menu operation program C has been received. If it is YES at step S814, control proceeds to step S815. If it is NO at step S814, the process of step S814 is again performed. Here, it is assumed that the menu operation program C has been received, and control proceeds to step S815.

At step S815, operation image display process M is performed. In the operation image display process M, control unit 510 executes the received program. Here, it is assumed that the received program is the menu operation program C. By executing the menu operation program C, control unit 510 generates the operation image MG500 of Fig. 35 utilizing VDP 532, and displays the operation image MG500 on display unit 530. Then, the process of step S815 ends, and the process of step S814 is again performed.

By the process described above, while the content is reproduced and displayed on display unit 630 of video display device 600, the operation image MG500 as the lower layer menu image is displayed on display unit 530 of communication terminal device 500.

### (Change of Reproduced Content)

Next, a process for changing the content that is reproduced and displayed, while a content is reproduced and displayed on display unit 630 of video display device 600 and operation image MG500 as the lower layer menu image is displayed on display unit 530 of communication terminal device 530, will be described.

Here, a process when the content obtaining operation M is done in communication terminal device 500 will be described.

The content obtaining operation M refers to touching of any of the button images MBG511, MBG512, MBG513, MBG514, MBG515, MBG516, MBG517, MBG518, MBG519, MBG520, MBG521 and MBG522 displayed on operation image MG500 as the lower layer menu image. Here, by way of example, assume that button image MBG511 is touched. Then, it is determined YES at step S510 of operation determining process MA shown in Fig. 25, and the process of step S511 is performed.

At step S511, touch-operation-specific process M as described above is performed. Here, in the touch-operation-specific process M, the content obtaining process M in which video display device 600 obtains the content corresponding to the touched button image from service server 800A is performed.

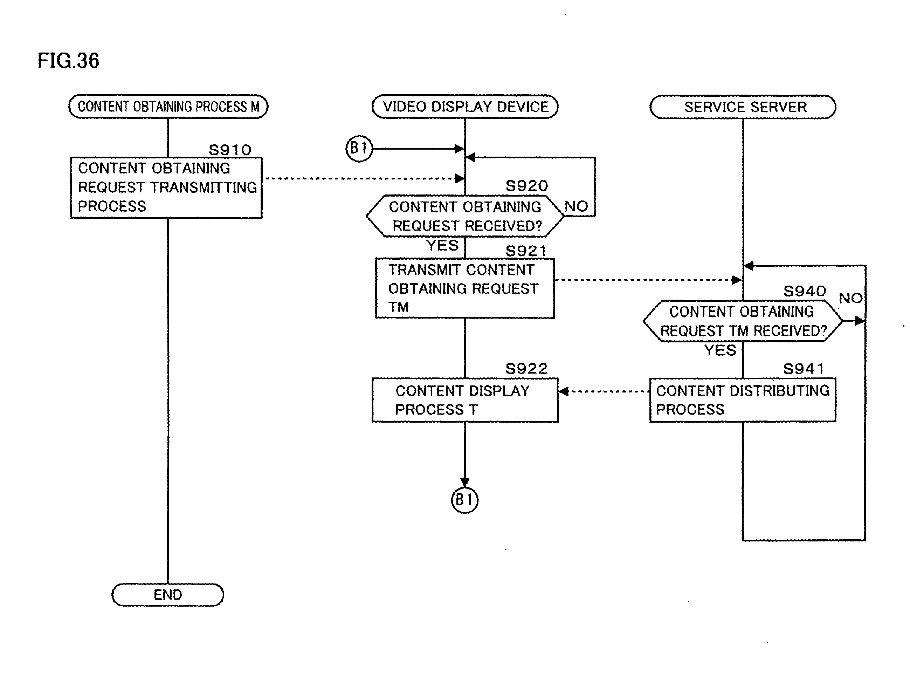

Fig. 36 is a flowchart representing the content obtaining process M, the process preformed by video display device 600, and the process performed by service server 800A. The processes performed by video display device 600 and service server 800A are performed independent from other processes.

Referring to Fig. 36, in the content obtaining process M performed by communication terminal device 500, first, the process of step S910 is performed.

At step S910, the content obtaining request transmitting process is performed. In the content obtaining request transmitting process, control unit 510 generates a contents obtaining remote control signal using remote control data that corresponds to the touched button image. The content obtaining remote control signal is a remote control signal allowing video display device 600 to obtain a content that corresponds to the touched button image from service server 800A.

Here, if the touched button image is button image MBG511, the corresponding remote control data is the data including program ID "P 1234" as represented by the genre information No. "1" of sub menu data D300SB shown in Fig. 27. Then, the generated content obtaining remote control signal will be a remote control signal including the program ID "P1234". Further, the content corresponding to the touched button image MBG511 is a content having the title of "B baseball".

Control unit 510 transmits, as the content obtaining request, the generated content obtaining remote control signal to video display device 600.

In video display device 600, first, the process of step S920 is performed.

At step S920, control unit 610 determines whether or not the content obtaining remote control signal as the content obtaining request has been received. If it is YES at step S920, control proceeds to step S921. If it is NO, the process of step S920 is again performed. Here, it is assumed that the content obtaining remote control signal including program ID "P 1234" has been received, and control proceeds to step S921.

At step S921, control unit 610 transmits the content obtaining request TM to service server 800A. Content obtaining request TM is a request for obtaining the content selected by communication terminal device 500 from service server 800A. The content obtaining request TM includes the program ID "P1234" for specifying the content, which is included in the content obtaining remote control signal. Here, the content selected in communication terminal device 500 is the content having the title "B baseball" from sub menu data D300SB shown in Fig. 27. Then, the process of step S921 ends. In the following, the content requested to service server 800A by the content obtaining request TM will also be referred to as requested content.

In the process performed by service server 800A, first, the process of step S940 is performed.

At step S940, control unit 810 determines whether or not the content obtaining request has been transmitted or not. If it is YES at step S940, the process of step S941 is performed. If it is NO, the process of step S940 is again performed. Here, it is assumed that the content obtaining request TM including program ID "P 1234" has been received, and control proceeds to step S941.

At step S941, a content distribution process is performed as at step S841 shown in Fig. 33. In the content distributing process, control unit 810 starts the process of distributing, in the streaming manner, the requested content to video display device 600 that has transmitted the content obtaining request. Here, the requested content is the content specified by program ID "P1234". The requested content may be distributed to video display device 600 as the broadcast radio wave. The requested content is assumed to be the moving image data having the title "B baseball".

When the distribution of requested content ends, the process of step S941 ends, and the process of step S940 is again performed.

In video display device 600, after the process of step S921, control proceeds to step S922.

At step S922, control unit 610 executes the content display process T. The content display process T is performed independent from other processes. Then, the process of step S922 ends, and the process of step S920 is again performed.

The content display process T is the same as the content display process T of step S821 shown in Fig. 33 and, therefore, detailed description will not be repeated. By this process, the content image based on the requested content having the title "B baseball" is reproduced and displayed on display unit 630.

By the process described above, while the content is reproduced and displayed on display unit 630 of video display device 600, operation image MG500 as the lower layer menu image is kept displayed on display unit 530 of communication terminal device 500 and, therefore, an effect is attained that the content displayed on display unit 630 of video display device 600 can easily be changed.

As described above, in the present embodiment, a process is performed in which an upper layer menu image and a lower image menu image related to the upper layer menu image are displayed on communication terminal device 500 and video display device 600, respectively. Specifically, a plurality of menus corresponding to a plurality of layers are displayed on a plurality of devices, respectively. Then, an operation on the upper layer menu and an operation on the lower layer menu are performed by a plurality of different operating units (display unit 530 and external buttons) of communication terminal device 500, respectively.

Further, the content reproduction display and the content menu display are performed on the video display device 600 and communication terminal device 500, respectively. Reproduction control of the reproduced and displayed content and the operation of changing the reproduced and displayed content are performed by a plurality of different operating units (external buttons and display unit 530) of communication terminal device 500.

Therefore, an effect is attained that the selection of desired information (content) can be realized quickly. As a result, an effect is attained that the desired information (content) can quickly be displayed.

### (Functional Block Diagram)

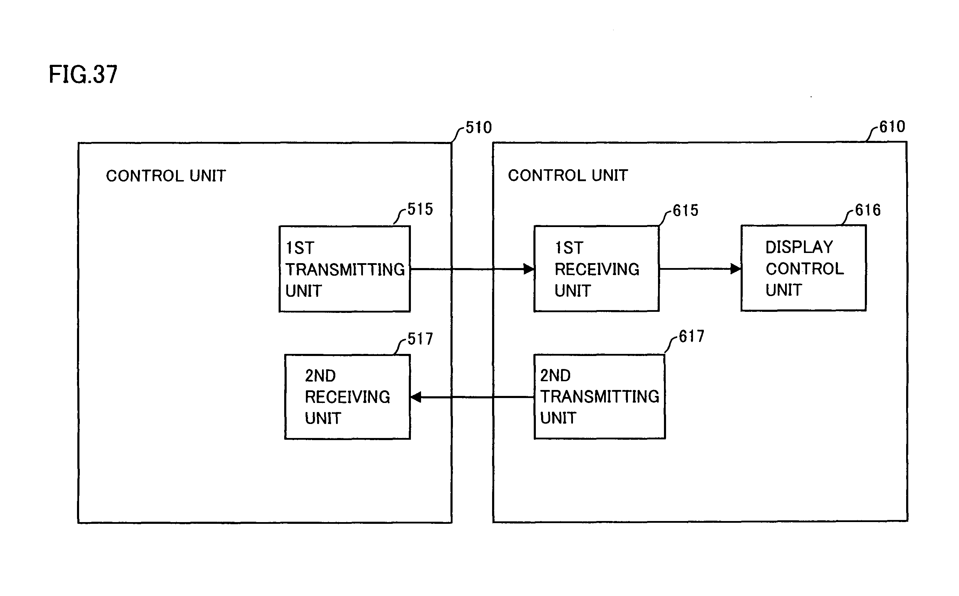

Fig. 37 is a functional block diagram of control unit 510 and control unit 610 in accordance with the present embodiment. Referring to Fig. 37, control unit 510 includes a first transmitting unit 512 and a second receiving unit 517. Control unit 610 includes a fist receiving unit 615, a display control unit 616 and a second transmitting unit 617.

The first transmission unit 515 transmits, in response to an external instruction input, a selection signal for selecting a plurality of types of first information, to video display device 600.

The first receiving unit 615 receives the selection signal transmitted from the first transmitting unit 515. Display control unit 616 displays a second menu for selecting any of a plurality of types of second information corresponding to the first information selected by the received selection signal, in place of the first menu, on the display unit 630. The second transmitting unit 617 transmits the first menu to communication terminal device 500.

The second receiving unit 517 receives the first menu transmitted from the second transmitting unit 617. All or part of the first and second transmitting units 515 and 517 included in control unit 510 may be implemented by hardware. Further, all or part of the first receiving unit 615, display control unit 616 and second transmitting unit 617 may be implemented by hardware.

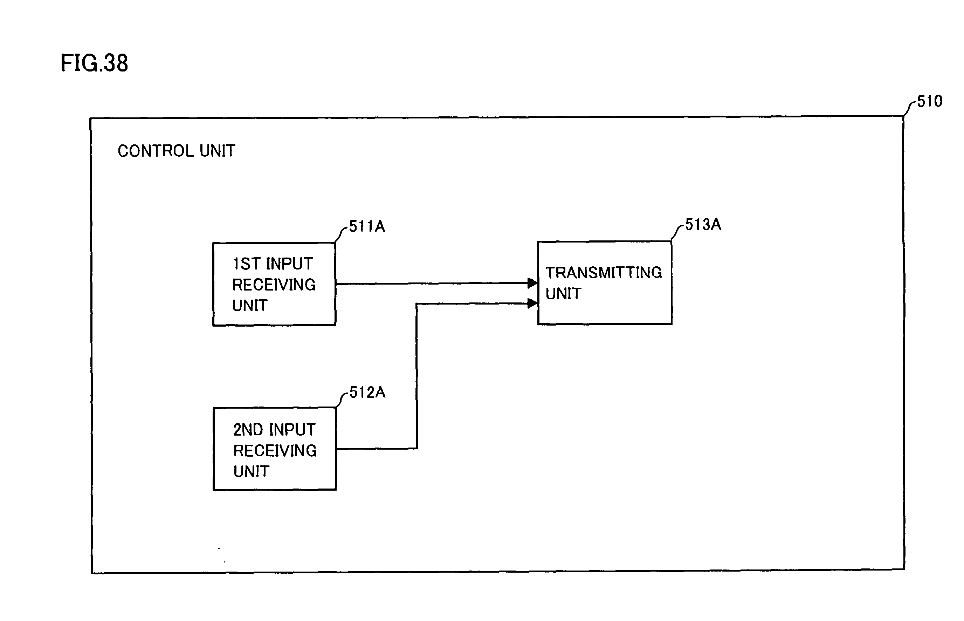

Fig. 38 is another example of the functional block diagram of control unit 510 in accordance with the present embodiment. Referring to Fig. 38, control unit 510 includes a first input receiving unit 511A, a second input receiving unit 512A, and a transmitting unit 513 A.

The first input receiving unit 511A receives an external instruction input. The second input receiving unit 512A receives an external instruction input.

Transmitting unit 513A performs a first process of transmitting a selection signal for selecting any of a plurality of types of first information to video display device 600, in response to the instruction input received by the first input receiving unit 511A, when the first menu for selecting any of the plurality of types of first information is displayed on display unit 630 of video display device 600. Further, transmitting unit 513A performs a second process of transmitting a selection signal for selecting any of the plurality of types of first information to the video display device 600, in response to the instruction input received by the second input receiving unit 512A, when a second menu for selecting any of the plurality of types of second information corresponding to the first information selected by the selection signal is displayed on the display unit 630 of video display device 600 and the first menu is displayed on the display unit 530.

All of or part of the first input receiving unit 511A, the second input receiving unit 512A and transmitting unit 513A included in control unit 510 may be implemented by hardware.

### (Development of Invention)

In the present embodiment, the process of displaying the upper layer menu image and the lower layer menu image on communication terminal device 500 and video display device 600, respectively, has been described. The present invention, however, can also be made use of even if the upper layer menu image and the lower layer menu image are displayed on video display device 600 and communication terminal device 500, respectively.

Further, in the present embodiment, the process of displaying the content reproduction display and the content menu display are given on video display device 600 and communication terminal device 500, respectively. The present invention, however, can also be made use of even if the content reproduction display and the content menu display are given on the communication terminal device 500 and the video display device 600, respectively.

Further, in the present embodiment, the process has been described in which reproduction control of the reproduced and displayed content and the operation of changing the reproduced and displayed content are performed by the external button and display unit 530 of communication terminal device 500, respectively. The present invention, however, may be made use of even when the reproduction control of the reproduced and displayed content and the operation of changing the reproduced and displayed content are performed by the display unit 530 and the external button of communication terminal device 500, respectively.

Further, in the present embodiment, an example has been described in which the plurality of menus corresponding to a plurality of layers are genre menu and contents menu, respectively. The plurality of menus corresponding to the plurality of layers are not limited to those mentioned above. The plurality of menus corresponding to the plurality of layers may be a plurality of Web pages linked to each other, for example, by hyper link character sequences.

In that case, a possible manner of use is that a top page of a WEB site is displayed on video display device 600 and a WEB page of a lower layer linked from the top page is displayed on communication terminal device 500. Another possible manner of use is that a Web page of a certain site is displayed on video display device 600, and a WEB page of another site linked from the WEB site of the said site is displayed on communication terminal device 500.

A still another possible manner of use is that a top page of a WEB site is displayed on video display device 600, and when a linked destination of the top page is displayed on video display device 600, the corresponding top page may be displayed on communication terminal device 500. In that case, if a different link destination of the top page is to be displayed on video display device 600, it is possible to easily re-select on communication terminal 500, without the necessity of returning the display of video display device 600.

Further, a manner of use is also possible in which products are viewed on an EC (Electronic Commerce) site on video display device 600 and operate and process the task of purchasing by the communication terminal device at one's hand.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1. A communication terminal device (500) capable of operating a video display device (600), the video display device performing, upon reception of a control signal, a process corresponding to the received said control signal, comprising:
a communication determining unit (511) determining whether or not data communication with said video display device is possible;
a display unit (530) displaying, if said communication determining unit determines data communication is possible, a display element for transmitting said control signal for operating said video display device;
an input receiving unit (510, 530, 540) receiving an external instruction input; and
a transmitting unit (512) transmitting, when said input receiving unit receives an instruction input corresponding to said display element displayed on said display unit, said control signal for operating said video display device to said video display device.

2. The communication terminal device according to claim 1, further comprising:
a receiving unit (560, 510) receiving operation data for operating said video display device transmitted from said video display device; and
a display control unit (510, 532) displaying an operation image based on said received operation data on said display unit; wherein
said transmitting unit transmits, when said input receiving unit receives an instruction input to said operation image displayed on said display unit, said control signal for operating said video display device corresponding to the received instruction input, to said video display device.

3. The communication terminal device according to claim 1, wherein
said control signal transmitted from said transmitting unit is a signal for controlling a power source of said video display device.

4. The communication terminal device according to claim 1, wherein
said transmitting unit transmits, when a content is displayed on said display unit, a control signal to have the content displayed on said display unit displayed on said video display device, to said video display device.

5. The communication terminal device according to claim 1, wherein
said communication determining unit determines whether or not data communication is possible with said video display device arranged at a position where distance between said communication terminal device and said video display device is not longer than a prescribed distance.

6. A communication terminal device (500) capable of operating a video display device (600), the video display device performing, upon reception of a control signal, a process corresponding to the received said control signal, comprising:
a communication determining unit (511) determining whether or not data communication with said video display device is possible;
a display unit (530) for displaying a content; and
a transmitting unit (512) transmitting, if said communication determining unit determines data communication is possible and a content is displayed on said display unit, a control signal to have the content displayed on said display unit displayed on said video display device, to said video display device.

7. The communication terminal device according to claim 6, further comprising:
an input receiving unit (510, 530, 540) receiving an external instruction input;
a receiving unit (560, 510) receiving operation data for operating said video display device transmitted from said video display device; and
a display control unit (510, 532) displaying an operation image based on said received operation data on said display unit; wherein
said transmitting unit transmits, when said input receiving unit receives an instruction input to said operation image displayed on said display unit, said control signal for operating said video display device corresponding to the received instruction input, to said video display device.

8. The communication terminal device according to claim 6, wherein
said communication determining unit determines whether or not data communication is possible with said video display device arranged at a position where distance between said communication terminal device and said video display device is not longer than a prescribed distance.

9. A control method executed in a system including a communication terminal device (500) with a display unit (530) and a video display device (600), comprising the steps of:
said video display device transmitting a connection signal enabling data communication with said video display device, to said communication terminal device (S120),
determining whether or not said communication terminal device has received said connection signal (S110);
if it is determined that said connection signal has been received, displaying, on said display unit, a display element for transmitting a control signal for operating said video display device (S115);
transmitting, if an instruction input to said display element displayed on said display unit is received by said communication terminal device, said control signal for operating said video display device to said video display device (S212);
said video display device receiving said control signal (S220); and
said video display device executing a process corresponding to received said control signal (S222).

10. A control method executed by a communication terminal device (500) capable of operating a video display device (600), the video display device performing, upon reception of a control signal, a process corresponding to the received said control signal, and including a display unit (530) for displaying a content, comprising the steps of:
determining whether or not data communication with said video display device is possible (S110); and
if it is determined that data communication is possible and a content is displayed on said display unit, transmitting a control signal to have the content displayed on said display unit displayed on said video display device, to said video display device (S 113).

11. The control method according to claim 10, wherein
at said step of determining whether or not data communication is possible, whether or not data communication is possible with said video display device arranged at a position where distance between said communication terminal device and said video display device is not longer than a prescribed distance is determined.

12. A video display system including a communication terminal device (500) and a video display device (600); wherein
said video display device includes
a transmitting unit (612) transmitting a connection signal enabling data communication with said video display device to said communication terminal device;
said communication terminal device includes
a communication determining unit (511) determining whether or not said connection signal has been received,
a display unit (530) for displaying a content, and
a transmitting unit (512) transmitting, if it is determined by said communication determining unit that said connection signal has been received and a content is displayed on said display unit, a control signal to have the content displayed on said display unit displayed on said video display device, to said video display device; and
said video display device further includes
a receiving unit (613) receiving said control signal, and
an executing unit (614) executing a process corresponding to received said control signal.

13. The video display system according to claim 12, wherein
said video display device further includes
a content display unit (630) for displaying a content, and
an information transmitting unit (610, 660) for transmitting, when a content is displayed on said content display unit, content information to have the content displayed on said content display unit displayed on said communication terminal device, to said communication terminal device.

## Amended claims

### Amended claims under Art. 19.1 PCT

**1.** (Amended) A communication terminal device (500) capable of operating a video display device (600), the video display device performing, upon reception of a control signal, a process corresponding to the received said control signal, comprising:
a content obtaining unit (502, 505) obtaining a content from outside;
a communication determining unit (511) determining whether or not data communication with said video display device within a prescribed distance is possible; and
a transmitting unit (512) transmitting, to said video display device with which data communication is determined possible by said communication determining unit, a control signal for displaying the content obtained by said content obtaining unit.

**2.** (Amended) The communication terminal device according to claim 1, further comprising:
a display unit (530) displaying the content obtained by said content obtaining unit.

**3.** (Amended) The communication terminal device according to claim 1, further comprising:
a display unit (530) displaying, if said communication determining unit determines data communication is possible, a display element for transmitting said control signal for operating said video display device; and
an input receiving unit (510, 530, 540) receiving an instruction input by an external operation; wherein
said transmitting unit transmits, when said input receiving unit receives an instruction input to said display element displayed on said display unit, said control signal for operating said video display device, to said video display device.

**4.** (Amended) The communication terminal device according to claim 1, wherein
said control signal transmitted from said transmitting unit is a signal for controlling a power source of said video display device; and
said control signal includes information of the content obtained by said content obtaining unit.

**5.** (Amended) A video display device (600) performing a process corresponding to a control signal transmitted from a communication terminal device (500), comprising:
a display unit (630) capable of displaying a video image when set to an operative state;
a receiving unit (613) receiving said control signal transmitted from said communication terminal device; and
a setting unit (610) setting said display unit to said operative state in response to reception of said control signal; wherein
said control signal includes content information;
said device further comprising
a display control unit (610, 632) causing said display unit set to said operative state and hence capable of displaying a video image, to display a content based on said content information included in said control signal.

**6.** (Amended) The video display device according to claim 5, further comprising:
a transmitting unit (612) transmitting a connection signal enabling data communication with said communication terminal device, to said communication terminal device; wherein
said receiving unit receives said control signal transmitted from said communication terminal device receiving said connection signal.

**7.** (Amended) The video display device according to claim 6, wherein
said transmitting unit transmits control information to have the content displayed on said display unit displayed on said communication terminal device, to said communication terminal device.

**8.** (Cancelled)

**9.** (Amended) A control method executed by a communication terminal device (500) capable of operating a video display device (600), the video display device performing, upon reception of a control signal, a process corresponding to the received said control signal, comprising the steps of:
said communication terminal device determining whether or not data communication with said video display device is possible within a prescribed distance (S110); and
said communication terminal device transmitting a control signal for displaying a content obtained from outside, to said video display device with which data communication is determined possible (S 113).

**10.** (Amended) A control method executed by a video display device (600) performing a process corresponding to a control signal transmitted from a communication terminal device (500) and including a display unit (630) capable of displaying a video image when set to an operative state, comprising the steps of:
said video display device receiving said control signal transmitted from said communication terminal device (S121); and
said video display device setting said display unit to said operative state in response to reception of said control signal (S123); wherein
said control signal includes content information;
said method further comprising the step of
said video display device displaying, on said display unit set to said operative state and hence capable of displaying a video image, a content based on said content information included in said control signal (S124).

**11.** (Cancelled)

**12.** (Cancelled)

**13.** (Cancelled)
